# EUROPEAN PATENT APPLICATION

(11) **EP 4 848 217 A1**
(43) Date of publication of application: **02.12.2026**
(21) Application number: 25747549.1
(22) Date of filing: 16.01.2025
(51) Int. Cl.: G06T 13/40

(54) **RENDERING METHOD AND APPARATUS, AND DEVICE-CLOUD COLLABORATIVE SYSTEM**

(30) Priority: 04.02.2024 CN 202410163509
(71) Applicant: Huawei Technologies Co., Ltd., Shenzhen, Guangdong 518129 (CN)
(72) Inventor: WANG, Jingye, Shenzhen, Guangdong 518129 (CN); CAO, Xiaoran, Shenzhen, Guangdong 518129 (CN); WANG, Pei, Shenzhen, Guangdong 518129 (CN); CAI, Kangying, Shenzhen, Guangdong 518129 (CN)
(74) Representative: Huawei European IPR
(86) International application number: PCT/CN2025/072725
(87) International publication number: WO 2025/161977

(57) **Abstract**

Embodiments of this application provide a rendering method and apparatus and a device-cloud collaboration system. The method includes: first, receiving a first candidate simulation result of a current frame; fusing a second candidate simulation result of the current frame and the first candidate simulation result of the current frame to obtain a target simulation result of the current frame; and then, rendering a three-dimensional scene based on the target simulation result of the current frame to obtain a rendered image of the current frame, where the first candidate simulation result of the current frame is a simulation result corresponding to a first time point, and the first time point is a predicted time point at which a terminal device receives the first candidate simulation result of the current frame; and the second candidate simulation result of the current frame is a simulation result corresponding to a second time point, and the second time point is a time point at which the terminal device actually receives the first candidate simulation result of the current frame. Device-cloud collaborative physical simulation can reduce a delay in receiving a physical simulation result on a device side, thereby reducing a probability of frame freezing.

## Description

This application claims priority to Chinese Patent Application No. 202410163509.1, filed with the China National Intellectual Property Administration on February 4, 2024 and entitled "RENDERING METHOD AND APPARATUS AND DEVICE-CLOUD COLLABORATION SYSTEM", which is incorporated herein by reference in its entirety.

### TECHNICAL FIELD

This application relates to the graphics processing field, and in particular, to a rendering method and apparatus and a device-cloud collaboration system.

### BACKGROUND

Currently, in addition to rendering, other graphics processing like physical simulation and character animation prediction is also involved in implementation of applications such as cloud gaming, metaverse, digital avatar livestreaming, virtual reality (Virtual Reality, VR), and augmented reality (Augmented Reality, AR). Generally, a graphics processing engine other than a rendering engine performs other graphics processing, and provides other graphics processing results over time. The rendering engine performs rendering based on the other graphics processing results, to form a vivid image and present the image to a user.

Because the rendering and the other graphics processing have high requirements on devices, a device-cloud collaboration manner is usually used. To be specific, a cloud side performs other graphics processing and delivers other graphics processing results to a device side, and then the device side performs rendering based on the other graphics processing results.

However, in an actual application process, a network delay, device freezing, and the like often occur. As a result, receiving the other graphics processing results on the device side is delayed, resulting in problems such as frame freezing.

### SUMMARY

In view of this, this application provides a rendering method and apparatus and a device-cloud collaboration system. The method can reduce a delay in receiving another graphics processing result (for example, a physical simulation result or a character animation prediction result) on a device side, thereby reducing a probability of frame freezing.

According to a first aspect, this application provides a device-cloud collaboration system. The device-cloud collaboration system includes a server and a terminal device.

The terminal device is configured to send physical simulation data to the server;
the server is configured to: perform physical simulation on a physical simulation object based on the physical simulation data to obtain a first candidate simulation result of a current frame; and send the first candidate simulation result of the current frame to the terminal device; and
the terminal device is further configured to: fuse a second candidate simulation result of the current frame and the first candidate simulation result of the current frame to obtain a target simulation result of the current frame; and render a three-dimensional scene based on the target simulation result of the current frame to obtain a rendered image of the current frame.

The three-dimensional scene includes the physical simulation object; the first candidate simulation result of the current frame is a simulation result corresponding to a first time point, and the first time point is a predicted time point at which the terminal device receives the first candidate simulation result of the current frame; and the second candidate simulation result of the current frame is a simulation result corresponding to a second time point, and the second time point is a time point at which the terminal device actually receives the first candidate simulation result of the current frame.

First, because it takes specific time to transmit to-be-exchanged data from the terminal device to the server (or from the server to the terminal device), the time point (namely, the first time point) at which the terminal device receives the first candidate simulation result of the current frame may be predicted first. Then, a physical simulation result corresponding to the first time point is generated as the first candidate simulation result of the current frame. In this way, the corresponding time point at which the terminal device receives the first candidate simulation result is close to an actual rendering and display time point, so that a delay in a motion status of the physical simulation object can be reduced, and a probability of frame freezing can be reduced.

In addition, there may be a difference between the first time point and the second time point, the second time point is closer to a real time point at which the terminal device plays the rendered image of the current frame than the first time point. Therefore, fusing the second candidate simulation result of the current frame and the first candidate simulation result of the current frame can enable the motion status of the physical simulation object to be closer to an actual motion status at a real time point and corresponding to the current frame. In addition, fusing the second candidate simulation result of the current frame and the first candidate simulation result of the current frame may be understood as performing a compromise between the motion status of the physical simulation object at the first time point and the motion status of the physical simulation object at the second time point. When the first time point is after the second time point, the first time point is farther away from a real time point at which the terminal device plays a rendered image of a previous frame. Performing a compromise between the motion status of the physical simulation object at the first time point and the motion status of the physical simulation object at the second time point can enable a change between the motion status of the physical simulation object in the current frame and the motion status in the previous frame to be smoother, so that a user can view the motion status of the physical simulation object in images of two adjacent frames more smoothly. When the first time point is before the second time point, this results in a delay in the motion status of the physical simulation object. Performing a compromise between the motion status of the physical simulation object at the first time point and the motion status of the physical simulation object at the second time point can reduce the delay in the motion status of the physical simulation object, thereby reducing the probability of frame freezing.

For example, the device-cloud collaboration system in this application may be applied to at least one of the following scenarios: cloud gaming, an AR/VR conference, a virtual concert, digital avatar livestreaming, and the like. This is not limited in this application.

For example, the server may also be referred to as a cloud or a cloud server. A specific implementation form of the server in this application may be a cloud server, a physical (independent) server, a site cluster server, or the like. This is not limited in this application. When the server is used in different scenarios, the server in this application may also be referred to as a game server, a video server, a livestreaming server, a VR/AR conference server, a virtual server, and the like based on the scenarios in which the server is used. This is not limited in this application.

For example, the terminal device includes but is not limited to a personal computer (Personal Computer, PC), a computer workstation, a smartphone, a tablet computer, a server, an intelligent camera, an intelligent vehicle, another type of cellular phone, a media consumption device, a wearable device (for example, an AR helmet or VR glasses), a set-top box, a game console, or the like. This is not limited in this application.

For example, physical simulation (physical simulation) (which may also be referred to as physical simulating) is a technology in which a computer is used to simulate a physical phenomenon in a real world, to generate more vivid effect of interacting with the world in an animation or a game. The physical simulation may include rigid body simulation (which may be used to simulate rotation, translation, and the like of a rigid object), elastic body simulation (which may be used to simulate motion, deformation, and the like of an elastic object), cloth simulation, and fluid simulation.

For example, rendering (Rendering) may be a process of displaying a three-dimensional model of an object (for example, a character, character's clothes, or a character's prop) in a three-dimensional scene on a two-dimensional plane.

For example, the physical simulation object in this application is bound to a character, and the motion status of the physical simulation object may change with a change of a motion status of the character. The character in this application may include virtual objects such as a game character, a participant, a virtual singer, and a digital avatar. The virtual object corresponds to an entity (for example, a person or an animal) that can move autonomously and whose motion is affected by an external force. For example, in a cloud gaming scenario, the physical simulation object includes game character's clothes, a game character's prop, and the like. For another example, in an AR/VR conference scenario, the physical simulation object includes participant's clothes. For another example, in a virtual concert scenario, the physical simulation object includes virtual singer's clothes. For another example, in a digital avatar livestreaming scenario, the virtual simulation object includes digital avatar's clothes.

For example, after receiving a user operation, the terminal device may send physical simulation data to the server. For example, the user operation may include at least one of adjusting a position of a character, adjusting an orientation of the character, or adjusting an action of the character (for example, walking, running, or jumping, which may also be understood as adjusting an animation sequence of the character).

For example, the physical simulation data may include data required for physical simulation (or in other words, the physical simulation data is data that affects the motion status of the physical simulation object). For example, the physical simulation data may include but is not limited to a physical simulation parameter, data processed through physical simulation, and the like. This is not limited in this application. The physical simulation parameter may include at least one of the following: an external force parameter (for example, a wind force parameter, and a position and an orientation of an external collision body), animation data of a character (which may be used to describe an animation status of the character, for example, a position and an orientation of the character (after adjustment), and a play position corresponding to an animation sequence of the character), status information of a physical simulation object (for example, a position and an orientation of a rigid body (after adjustment) (which may be understood as a position and an orientation of a center of the rigid body)), and the like. This is not limited in this application. The data processed through physical simulation may include a cloth model, a rigid body model, and the like. This is not limited in this application.

For example, in the cloud gaming scenario, the physical simulation data includes a wind force parameter, description information of an object that may collide with game character's clothes, and animation data of the character.

For example, in the cloud gaming scenario, the physical simulation data includes a wind force parameter, description information of an object that may collide with game character's clothes, animation data of the character, and a cloth model corresponding to the game character's clothes.

For example, in the cloud gaming scenario, the physical simulation data includes animation data of a game character, and a position and an orientation of a game character's prop.

For example, in the cloud gaming scenario, the physical simulation data includes animation data of a game character, a position and an orientation of a game character's prop, and a rigid body model corresponding to the game character's prop.

It should be noted that the first time point may be a predicted time point at which the terminal device starts to receive the first candidate simulation result of the current frame, or may be a predicted time point at which the terminal device completes receiving the first candidate simulation result of the current frame. (A time difference between the two cases is very small, and may be ignored in some scenarios. Therefore, the first time point may alternatively be any time point between time points corresponding to the two cases.) Alternatively, the first time point may be a predicted time point at which the terminal device starts to receive an encoded bitstream, or may be a predicted time point at which the terminal device completes receiving an encoded bitstream, or may be a predicted time point at which the terminal device obtains a reconstruction result of the first candidate simulation result of the current frame by decoding an encoded bitstream. (A time difference between the three cases is very small, and may be ignored in some scenarios. Therefore, the first time point may alternatively be any time point between any two of time points corresponding to the three cases.) The encoded bitstream is obtained by encoding the first candidate simulation result. A field in the first several fields of the encoded bitstream carries a length of the encoded bitstream. The terminal device may parse the field from the encoded bitstream, and determine whether receiving the encoded bitstream is completed.

It should be noted that the second time point may be a time point at which the terminal device actually starts to receive the first candidate simulation result of the current frame, or may be a time point at which the terminal device actually completes receiving the first candidate simulation result of the current frame. (A time difference between the two cases is very small, and may be ignored in some scenarios. Therefore, the second time point may alternatively be any time point between time points corresponding to the two cases.) Alternatively, the second time point may be a time point at which the terminal device actually starts to receive an encoded bitstream, or may be a time point at which the terminal device actually completes receiving an encoded bitstream, or may be a time point at which the terminal device obtains a reconstruction result of the first candidate simulation result of the current frame by decoding an encoded bitstream. (A time difference between the three cases is very small, and may be ignored in some scenarios. Therefore, the second time point may alternatively be any time point between any two of time points corresponding to the three cases.)

For example, the server may compress the first candidate simulation result of the current frame and then send the compressed first candidate simulation result, or may directly send the first candidate simulation result of the current frame that is not compressed. This is not limited in this application.

For example, the three-dimensional scene may include a character and a physical simulation object bound to the character. It should be understood that the three-dimensional scene may further include another object (for example, a character whose position, orientation, and action are not adjusted by the user, or another physical simulation object). This is not limited in this application.

In a possible manner, the second candidate simulation result of the current frame is obtained by the terminal device by performing physical simulation based on the physical simulation data. It should be noted that complexity of physical simulation (which may be referred to as "simple physical simulation") performed by the terminal device to obtain the second candidate simulation result of the current frame is lower than complexity of physical simulation (which may be referred to as "complex physical simulation") performed by the server to obtain the first candidate simulation result of the current frame. Alternatively, a computational capability required for performing physical simulation by the terminal device to obtain the second candidate simulation result of the current frame is lower than a computational capability required for performing physical simulation by the server to obtain the first candidate simulation result of the current frame. Correspondingly, precision of the second candidate simulation result of the current frame is lower than precision of the first candidate simulation result of the current frame.

In a possible manner, the second candidate simulation result of the current frame is generated by the terminal device through pre-baking, or is generated by the server (or a third-party device) through pre-baking and sent to the terminal device. The terminal device (or the server or the third-party device) may perform physical simulation (physical simulation in a pre-baking process, which has same complexity as physical simulation performed by the server in S302, and may also be referred to as "complex physical simulation") for N (N is a positive integer) times in advance to obtain N third candidate simulation results. The N third candidate simulation results one-to-one correspond to N preset user operations. Then, a third candidate simulation result that matches a user operation received this time is selected from the N third candidate simulation results as the second candidate simulation result of the current frame. The third candidate simulation result that matches the user operation received this time may be a third candidate simulation result that corresponds to the preset user operation and that is the same as or closest to the user operation received this time.

According to the first aspect, the terminal device is further configured to fuse a target simulation result of a rendered frame and the first candidate simulation result of the current frame to obtain a fused result; and the terminal device is specifically configured to fuse the second candidate simulation result of the current frame and the fused result to obtain the target simulation result of the current frame. In this way, fusing the target simulation result of the rendered frame and the first candidate simulation result of the current frame can enable a change between the motion status of the physical simulation object in the current frame and the motion status in the previous frame to be smoother, so that a user can view the motion status of the physical simulation object in images of two adjacent frames more smoothly.

For example, the target simulation result of the rendered frame is generated by the terminal device. A manner of generating the target simulation result of the rendered frame is similar to the manner of generating the target simulation result of the current frame. Details are not described herein again.

For example, the rendered frame may be a previous frame of the current frame.

According to the first aspect or any one of the foregoing implementations of the first aspect, the first candidate simulation result of the current frame includes a first cloth model of the current frame, the second candidate simulation result of the current frame includes a second cloth model of the current frame, and the target simulation result of the current frame includes a target cloth model of the current frame;
the server is further configured to: encode the first cloth model of the current frame to obtain an encoded bitstream; and send the encoded bitstream to the terminal device; and
the terminal device is further configured to: decode the encoded bitstream to obtain a reconstruction result of the first cloth model of the current frame; and fuse the second cloth model of the current frame and the reconstruction result of the first cloth model of the current frame to obtain the target cloth model of the current frame.

Because a data volume of the cloth model is large, compressing the cloth model before transmission can reduce bandwidth requirements, reduce bit rate overheads, and reduce server load.

It should be noted that the reconstruction result of the first cloth model of the current frame may be the same as or different from the first cloth model of the current frame, depending on whether the server performs lossy encoding or lossless encoding on the first cloth model of the current frame.

For example, the terminal device is specifically configured to: fuse the target simulation result of the rendered frame and the reconstruction result of the first candidate simulation result of the current frame to obtain the fused result; and fuse the second candidate simulation result of the current frame and the fused result to obtain the target simulation result of the current frame.

According to the first aspect or any one of the foregoing implementations of the first aspect, the physical simulation data includes first animation data, the first animation data is used to describe an animation status of a character at a third time point, and the third time point is a time point at which the terminal device sends the first animation data;
the server is specifically configured to predict second animation data based on the first animation data, where the second animation data is used to describe an animation status of the character at the first time point;
the server is further configured to perform physical simulation on the physical simulation object based on the physical simulation data and the second animation data to obtain the first candidate simulation result of the current frame, where the three-dimensional scene includes the physical simulation object and the character, and the character is bound to the physical simulation object;
the server is further configured to send the second animation data; and
the terminal device is further configured to receive the second animation data.

Because it takes specific time to transmit to-be-exchanged data from the terminal device to the server (or from the server to the terminal device), the server may predict, based on the first animation data in the physical simulation data, animation data of the character at a time point (namely, the first time point) after the third time point, to reduce a delay in an action of the character. In addition, the first candidate simulation result of the current frame is generated based on the second animation data, so that a delay in a motion status of the physical simulation object can be reduced.

For example, the first animation data includes at least one of the following:
an animation sequence identifier of the character;
an animation sequence of the character;
an encoded animation sequence of the character; and
a play position of the animation sequence of the character at the third time point, and a position and an orientation of the character at the third time point.

For example, the second animation data includes a play position of the animation sequence of the character at the first time point, and a skeleton status, a position, and an orientation of the character at the first time point.

According to the first aspect or any one of the foregoing implementations of the first aspect, the physical simulation data includes second animation data, and the second animation data is used to describe an animation status of a character at the first time point;
the server is specifically configured to perform physical simulation on the physical simulation object based on the second animation data to obtain the first candidate simulation result of the current frame, where the three-dimensional scene includes the physical simulation object and the character, and the character is bound to the physical simulation object.

According to the first aspect or any one of the foregoing implementations of the first aspect,
the terminal device is further configured to fuse a play position of the animation sequence of the character at the second time point and the play position of the animation sequence of the character at the first time point to obtain a target play position of the character; and
the terminal device is specifically configured to render the three-dimensional scene based on the target simulation result of the current frame and the target play position of the character to obtain the rendered image of the current frame.

In other words, predicted animation data of the character at the first time point and the animation data that is of the character at the second time point and that is determined by the terminal device are fused, so that an action of the character in two adjacent frames is smoother. In addition, the terminal device further fuses the first candidate simulation result of the current frame and the second candidate simulation result of the current frame. In this way, it can be ensured that the motion status of cloth adapts to an action of the character, thereby preventing a clipping phenomenon.

According to the first aspect or any one of the foregoing implementations of the first aspect, the terminal device is specifically configured to perform weighted calculation on the play position of the animation sequence of the character at the first time point and the play position of the animation sequence of the character at the second time point based on a first weight and a second weight to obtain the target play position of the character.

According to the first aspect or any one of the foregoing implementations of the first aspect, the first weight corresponds to the play position of the animation sequence of the character at the first time point, and the second weight corresponds to the play position of the animation sequence of the character at the second time point; and
the first weight is inversely proportional to a difference between the first time point and the second time point, and the second weight is directly proportional to the difference between the first time point and the second time point.

In other words, a larger difference between the first time point and the second time point indicates higher reliability of the play position of the animation sequence of the character at the second time point; and a smaller difference between the first time point and the second time point indicates higher reliability of the play position of the animation sequence of the character at the first time point. In this way, a jump or instantaneous movement of the action of the character on a device side can be prevented, so that the action of the character in two adjacent frames is more natural and smoother.

For example, the second weight is a difference between 1 and the first weight.

According to the first aspect or any one of the foregoing implementations of the first aspect, the terminal device is specifically configured to perform weighted calculation on the target simulation result of the rendered frame and the first candidate simulation result of the current frame based on a third weight and a fourth weight to obtain the fused result.

According to the first aspect or any one of the foregoing implementations of the first aspect, the third weight corresponds to the target simulation result of the rendered frame, and the fourth weight corresponds to the first candidate simulation result of the current frame; the third weight is inversely proportional to a difference between a fourth time point and a fifth time point, and the fourth weight is directly proportional to the difference between the fourth time point and the fifth time point; and the fourth time point is a time point at which the terminal device actually receives a first candidate simulation result of the rendered frame, and the fifth time point is a time point at which the terminal device fuses the second candidate simulation result of the current frame and the first candidate simulation result of the current frame.

In other words, a larger difference between the fourth time point and the fifth time point indicates a smaller weight of a target cloth model of the rendered frame; and a smaller difference between the fourth time point and the fifth time point indicates a larger weight of the target cloth model of the rendered frame. In this way, a jump or instantaneous movement of the motion status of the cloth on the device side can be prevented, so that the motion status of the cloth in two adjacent frames is more natural and smoother.

It should be noted that the fourth time point may be a time point at which the terminal device actually starts to receive the first cloth model of the rendered frame, or may be a time point at which the terminal device actually completes receiving the first cloth model of the rendered frame. (A time difference between the two cases is very small, and may be ignored in some scenarios. Therefore, the fourth time point may alternatively be any time point between time points corresponding to the two cases.) Alternatively, the fourth time point may be a time point at which the terminal device actually starts to receive an encoded bitstream, or may be a time point at which the terminal device actually completes receiving an encoded bitstream, or may be a time point at which the terminal device obtains a reconstruction result of the first cloth model of the rendered frame by decoding an encoded bitstream. (A time difference between the three cases is very small, and may be ignored in some scenarios. Therefore, the fourth time point may alternatively be any time point between time points in the three cases.)

It should be noted that the fifth time point may be a time point at which the terminal device starts to fuse the target cloth model of the rendered frame and the reconstruction result of the first cloth model of the current frame, or may be a time point at which the terminal device completes fusing the target cloth model of the rendered frame and the reconstruction result of the first cloth model of the current frame. (A time difference between the two cases is very small, and may be ignored in some scenarios. Therefore, the fifth time point may alternatively be any time point between time points corresponding to the two cases.)

According to the first aspect or any one of the foregoing implementations of the first aspect, the terminal device is specifically configured to perform weighted calculation on the second candidate simulation result of the current frame and the fused result based on a fifth weight and a sixth weight to obtain the target simulation result of the current frame.

According to the first aspect or any one of the foregoing implementations of the first aspect, the fifth weight corresponds to the second candidate simulation result of the current frame, and the sixth weight corresponds to the fused result;
the fifth weight is directly proportional to a difference between the second time point and a sixth time point, and the sixth weight is inversely proportional to the difference between the second time point and the sixth time point; and
the sixth time point is a time point at which the terminal device sends the physical simulation data.

In this way, a local low-configuration result (the second candidate simulation result of the current frame) of a device-side device and a high-configuration result (the first candidate simulation result of the current frame) delivered by a cloud side can be mixed. If a clock cycle between two frames in which the device-side device sends data and receives data is too long, reliability of a result delivered by the cloud side is not high. In this case, a final result is less affected by cloth simulation on the cloud side.

For example, the sixth time point may be the same as or different from the first time point. This is not limited in this application.

It should be noted that the sixth time point may be a time point at which the terminal device starts to send the physical simulation data, or may be a predicted time point at which the terminal device completes sending the physical simulation data. (A time difference between the two cases is very small, and may be ignored in some scenarios. Therefore, the sixth time point may alternatively be any time point between time points corresponding to the two cases.) This is not limited in this application.

According to the first aspect or any one of the foregoing implementations of the first aspect, the physical simulation data further includes switching information, where the switching information includes at least one of the following: an identifier of the physical simulation object, a model of the physical simulation object, or an encoded model of the physical simulation object, where the identifier of the physical simulation object indicates the model of the physical simulation object.

In this way, the physical simulation object can be switched based on a user operation.

According to the first aspect or any one of the foregoing implementations of the first aspect,
the terminal device is further configured to send a first timestamp;
the server is further configured to verify the first timestamp; and
the server is specifically configured to perform physical simulation on the physical simulation object based on the physical simulation data after verification on the first timestamp succeeds, to obtain the first candidate simulation result of the current frame.

In this way, timeliness of the to-be-exchanged data transmitted between the terminal device and the server can be ensured, and a delay between an action of a character animation and a motion status of the physical simulation object can be prevented from being excessively long, thereby improving user viewing experience.

For example, the server may calculate a difference between a current time and the first timestamp. When the difference between the current time and the first timestamp is greater than a first verification threshold, it may be determined that the verification on the first timestamp fails, and the procedure may be ended, that is, character animation prediction and physical simulation, and subsequent other steps are not performed. When the difference between the current time and the first timestamp is less than or equal to the first verification threshold, it may be determined that the verification on the first timestamp succeeds. The first timestamp may be set as required. This is not limited in this application.

According to the first aspect or any one of the foregoing implementations of the first aspect,
the server is further configured to send a second timestamp;
the terminal device is further configured to: receive the second timestamp; and verify the second timestamp; and
the terminal device is specifically configured to: when verification on the second timestamp succeeds, perform the step of fusing the second candidate simulation result of the current frame and the first candidate simulation result of the current frame to obtain the target simulation result of the current frame.

In this way, timeliness of the to-be-exchanged data transmitted between the terminal device and the server can be ensured, and a delay between an action of a character animation and a motion status of the physical simulation object can be prevented from being excessively long, thereby improving user viewing experience.

For example, the terminal device may calculate a difference between a current time and the second timestamp. When the difference between the current time and the second timestamp is greater than a second verification threshold, it may be determined that the verification on the second timestamp fails, the second cloth model of the current frame may be used as the target cloth model of the current frame, and the play position corresponding to the animation sequence of the character at the second moment is used as the target play position of the character. When the difference between the current time and the second timestamp is less than or equal to the second verification threshold, it may be determined that the verification on the second timestamp succeeds. The second verification threshold may be set as required. This is not limited in this application.

According to the first aspect or any one of the foregoing implementations of the first aspect, the first candidate simulation result of the current frame includes at least one of the following: a position and an orientation of a rigid body, or a cloth model.

According to a second aspect, this application provides a rendering method applied to a terminal device. The method includes: first, receiving a first candidate simulation result of a current frame; then, fusing a second candidate simulation result of the current frame and the first candidate simulation result of the current frame to obtain a target simulation result of the current frame; and then, rendering a three-dimensional scene based on the target simulation result of the current frame to obtain a rendered image of the current frame, where the first candidate simulation result of the current frame is a simulation result corresponding to a first time point, and the first time point is a predicted time point at which the terminal device receives the first candidate simulation result of the current frame; and the second candidate simulation result of the current frame is a simulation result corresponding to a second time point, and the second time point is a time point at which the terminal device actually receives the first candidate simulation result of the current frame.

According to the second aspect, the method further includes: fusing a target simulation result of a rendered frame and the first candidate simulation result of the current frame to obtain a fused result; and fusing the second candidate simulation result of the current frame and the first candidate simulation result of the current frame to obtain the target simulation result of the current frame includes: fusing the second candidate simulation result of the current frame and the fused result to obtain the target simulation result of the current frame.

According to the second aspect or any one of the foregoing implementations of the second aspect, the method further includes: sending physical simulation data, where the physical simulation data includes first animation data, the first animation data is used to describe an animation status of a character at a third time point, and the third time point is a time point at which the terminal device sends the first animation data; the first candidate simulation result of the current frame is obtained by performing physical simulation on a physical simulation object based on second animation data, the second animation data is obtained through prediction based on the first animation data, and the second animation data is used to describe an animation status of the character at the first time point; and the three-dimensional scene includes the physical simulation object and the character, and the character is bound to the physical simulation object.

According to the second aspect or any one of the foregoing implementations of the second aspect, the first animation data includes at least one of the following:
an animation sequence identifier of the character;
an animation sequence of the character;
an encoded animation sequence of the character; and
a play position of the animation sequence of the character at the third time point, and a position and an orientation of the character at the third time point.

According to the second aspect or any one of the foregoing implementations of the second aspect, the method further includes: sending physical simulation data, where the physical simulation data includes second animation data, and the second animation data is used to describe an animation status of a character at the first time point; the first candidate simulation result of the current frame is obtained by performing physical simulation on a physical simulation object based on the second animation data; and the three-dimensional scene includes the physical simulation object and the character, and the character is bound to the physical simulation object.

According to the second aspect or any one of the foregoing implementations of the second aspect, the second animation data includes a play position of the animation sequence of the character at the first time point, and a skeleton status, a position, and an orientation of the character at the first time point.

According to the second aspect or any one of the foregoing implementations of the second aspect, the method further includes: fusing a play position of the animation sequence of the character at the second time point and the play position of the animation sequence of the character at the first time point to obtain a target play position of the character; and
rendering the three-dimensional scene based on the target simulation result of the current frame to obtain the rendered image of the current frame includes: rendering the three-dimensional scene based on the target simulation result of the current frame and the target play position of the character to obtain the rendered image of the current frame.

For example, the play position of the animation sequence of the character at the first time point may be generated by the terminal device, or may be carried in the second animation data received from the server.

According to the second aspect or any one of the foregoing implementations of the second aspect, fusing the play position of the animation sequence of the character at the second time point and the play position of the animation sequence of the character at the first time point to obtain the target play position of the character includes: performing weighted calculation on the play position of the animation sequence of the character at the first time point and the play position of the animation sequence of the character at the second time point based on a first weight and a second weight to obtain the target play position of the character.

According to the second aspect or any one of the foregoing implementations of the second aspect, the first weight corresponds to the play position of the animation sequence of the character at the first time point, and the second weight corresponds to the play position of the animation sequence of the character at the second time point; and the first weight is inversely proportional to a difference between the first time point and the second time point, and the second weight is directly proportional to the difference between the first time point and the second time point.

According to the second aspect or any one of the foregoing implementations of the second aspect, fusing the target simulation result of the rendered frame and the first candidate simulation result of the current frame to obtain the fused result includes: performing weighted calculation on the target simulation result of the rendered frame and the first candidate simulation result of the current frame based on a third weight and a fourth weight to obtain the fused result.

According to the second aspect or any one of the foregoing implementations of the second aspect, the third weight corresponds to the target simulation result of the rendered frame, and the fourth weight corresponds to the first candidate simulation result of the current frame; the third weight is inversely proportional to a difference between a fourth time point and a fifth time point, and the fourth weight is directly proportional to the difference between the fourth time point and the fifth time point; and the fourth time point is a time point at which the terminal device actually receives a first candidate simulation result of the rendered frame, and the fifth time point is a time point at which the terminal device fuses the second candidate simulation result of the current frame and the first candidate simulation result of the current frame.

According to the second aspect or any one of the foregoing implementations of the second aspect, fusing the second candidate simulation result of the current frame and the fused result to obtain the target simulation result of the current frame includes: performing weighted calculation on the second candidate simulation result of the current frame and the fused result based on a fifth weight and a sixth weight to obtain the target simulation result of the current frame.

According to the second aspect or any one of the foregoing implementations of the second aspect, the fifth weight corresponds to the second candidate simulation result of the current frame, and the sixth weight corresponds to the fused result; the fifth weight is directly proportional to a difference between the second time point and a sixth time point, and the sixth weight is inversely proportional to the difference between the second time point and the sixth time point; and the sixth time point is a time point at which the terminal device sends the physical simulation data, and the first candidate simulation result of the current frame is obtained by performing physical simulation on the physical simulation object based on the physical simulation data.

According to the second aspect or any one of the foregoing implementations of the second aspect, the first candidate simulation result of the current frame includes a first cloth model of the current frame, the second candidate simulation result of the current frame includes a second cloth model of the current frame, and the target simulation result of the current frame includes a target cloth model of the current frame;
receiving the first candidate simulation result of the current frame includes: receiving an encoded bitstream, where the encoded bitstream includes an encoded first cloth model of the current frame;
the method further includes: decoding the encoded bitstream to obtain a reconstruction result of the first cloth model of the current frame; and fusing the second candidate simulation result of the current frame and the first candidate simulation result of the current frame to obtain the target simulation result of the current frame includes: fusing the second cloth model of the current frame and the reconstruction result of the first cloth model of the current frame to obtain the target cloth model of the current frame.

According to the second aspect or any one of the foregoing implementations of the second aspect, the physical simulation data further includes switching information, where the switching information includes at least one of the following: an identifier of the physical simulation object, a model of the physical simulation object, or an encoded model of the physical simulation object, where the identifier of the physical simulation object indicates the model of the physical simulation object.

According to the second aspect or any one of the foregoing implementations of the second aspect, the method further includes: sending a first timestamp, where the first candidate simulation result of the current frame is obtained by performing physical simulation on the physical simulation object based on the physical simulation data after verification on the first timestamp succeeds.

According to the second aspect or any one of the foregoing implementations of the second aspect, the method further includes: receiving a second timestamp; and when verification the second timestamp succeeds, performing the step of fusing the second candidate simulation result of the current frame and the first candidate simulation result of the current frame to obtain the target simulation result of the current frame.

According to the second aspect or any one of the foregoing implementations of the second aspect, the first candidate simulation result of the current frame includes at least one of the following: a position and an orientation of a rigid body, or a cloth model.

The second aspect and any one of the implementations of the second aspect correspond to the first aspect and any one of the implementations of the first aspect, respectively. For technical effect corresponding to the second aspect and any one of the implementations of the second aspect, refer to the technical effect corresponding to the first aspect and any one of the implementations of the first aspect. Details are not described herein again.

According to a third aspect, this application provides a physical simulation method applied to a server. The method includes: first, receiving physical simulation data; then, performing physical simulation on a physical simulation object based on the physical simulation data to obtain a first candidate simulation result of a current frame; then, encoding the first candidate simulation result of the current frame to obtain an encoded bitstream; and then, sending the encoded bitstream.

According to the third aspect, the first candidate simulation result of the current frame includes a first cloth model of the current frame.

The third aspect and any one of the implementations of the third aspect correspond to the first aspect and any one of the implementations of the first aspect, respectively. For technical effect corresponding to the third aspect and any one of the implementations of the third aspect, refer to the technical effect corresponding to the first aspect and any one of the implementations of the first aspect. Details are not described herein again.

According to a fourth aspect, this application provides a device-cloud collaboration system. The device-cloud collaboration system includes a server and a terminal device.

The terminal device is configured to send first animation data to the server, where the first animation data is used to describe an animation status of a character at a first time point, and the first time point is a time point at which the terminal device sends the first animation data to the server;
the server is configured to: predict second animation data based on the first animation data, where the second animation data is used to describe an animation status of the character at a second time point, and the second time point is a predicted time point at which the terminal device receives the second animation data; and send the second animation data to the terminal device; and
the terminal device is configured to: fuse a play position of an animation sequence of the character at the second time point and a play position of the animation sequence of the character at a third time point to obtain a target play position of the character; and render a three-dimensional scene based on the target play position of the character to obtain a rendered image, where the three-dimensional scene includes the character, and the third time point is a time point at which the terminal device actually receives the second animation data.

The fourth aspect and any one of the implementations of the fourth aspect correspond to the first aspect and any one of the implementations of the first aspect, respectively. For technical effect corresponding to the fourth aspect and any one of the implementations of the fourth aspect, refer to the technical effect corresponding to the first aspect and any one of the implementations of the first aspect. Details are not described herein again.

According to a fifth aspect, an embodiment of this application provides a rendering method applied to a terminal device. The method includes: first, sending first animation data, where the first animation data is used to describe an animation status of a character at a first time point, and the first time point is a time point at which the terminal device sends the first animation data to a server; then, receiving second animation data, where the second animation data is used to describe an animation status of the character at a second time point, and the second time point is a predicted time point at which the terminal device receives the second animation data; then, fusing a play position of an animation sequence of the character at the second time point and a play position of the animation sequence of the character at a third time point to obtain a target play position of the character, where the third time point is a time point at which the terminal device actually receives the second animation data; and then, rendering a three-dimensional scene based on the target play position of the character to obtain a rendered image, where the three-dimensional scene includes the character.

According to the fifth aspect, fusing the play position of the animation sequence of the character at the second time point and the play position of the animation sequence of the character at the third time point to obtain the target play position of the character includes: performing weighted calculation on the play position of the animation sequence of the character at the second time point and the play position of the animation sequence of the character at the third time point based on a first weight and a second weight to obtain the target play position of the character.

According to the fifth aspect or any one of the foregoing implementations of the fifth aspect, the first weight corresponds to the play position of the animation sequence of the character at the second time point, and the second weight corresponds to the play position of the animation sequence of the character at the third time point; and the first weight is inversely proportional to a difference between the second time point and the third time point, and the second weight is directly proportional to the difference between the second time point and the third time point.

According to the fifth aspect or any one of the foregoing implementations of the fifth aspect, the first animation data includes at least one of the following:
an animation sequence identifier of the character;
the animation sequence of the character;
an encoded animation sequence of the character; and
a play position of the animation sequence of the character at the first time point, and a position and an orientation of the character at the first time point.

According to the fifth aspect or any one of the foregoing implementations of the fifth aspect, the second animation data includes the play position of the animation sequence of the character at the second time point, and a skeleton status, a position, and an orientation of the character at the second time point.

The fifth aspect and any one of the implementations of the fifth aspect correspond to the first aspect and any one of the implementations of the first aspect, respectively. For technical effect corresponding to the fifth aspect and any one of the implementations of the fifth aspect, refer to the technical effect corresponding to the first aspect and any one of the implementations of the first aspect. Details are not described herein again.

According to a sixth aspect, an embodiment of this application provides a rendering apparatus. The rendering apparatus includes:
a first receiving module, configured to receive a first candidate simulation result of a current frame;
a first fusion module, configured to fuse a second candidate simulation result of the current frame and the first candidate simulation result of the current frame to obtain a target simulation result of the current frame; and
a first rendering module, configured to render a three-dimensional scene based on the target simulation result of the current frame to obtain a rendered image of the current frame, where
the first candidate simulation result of the current frame is a simulation result corresponding to a first time point, and the first time point is a predicted time point at which a terminal device receives the first candidate simulation result of the current frame; and the second candidate simulation result of the current frame is a simulation result corresponding to a second time point, and the second time point is a time point at which the terminal device actually receives the first candidate simulation result of the current frame.

For example, the first fusion module is specifically configured to: fuse a target simulation result of a rendered frame and the first candidate simulation result of the current frame to obtain a fused result; and fuse the second candidate simulation result of the current frame and the fused result to obtain the target simulation result of the current frame.

It should be understood that the rendering apparatus according to the sixth aspect may perform the method steps in the second aspect and any one of the implementations of the second aspect. Details are not described herein again.

The sixth aspect and any one of the implementations of the sixth aspect correspond to the first aspect and any one of the implementations of the first aspect, respectively. For technical effect corresponding to the sixth aspect and any one of the implementations of the sixth aspect, refer to the technical effect corresponding to the first aspect and any one of the implementations of the first aspect. Details are not described herein again.

According to a seventh aspect, this application provides a physical simulation apparatus. The physical simulation apparatus includes:
a second receiving module, configured to receive physical simulation data;
a physical simulation module, configured to perform physical simulation on a physical simulation object based on the physical simulation data to obtain a first candidate simulation result of a current frame;
an encoding module, configured to encode the first candidate simulation result of the current frame to obtain an encoded bitstream; and
a first sending module, configured to send the encoded bitstream.

For example, the first candidate simulation result of the current frame includes a first cloth model of the current frame.

The seventh aspect and any one of the implementations of the seventh aspect correspond to the first aspect and any one of the implementations of the first aspect, respectively. For technical effect corresponding to the seventh aspect and any one of the implementations of the seventh aspect, refer to the technical effect corresponding to the first aspect and any one of the implementations of the first aspect. Details are not described herein again.

According to an eighth aspect, this application provides a rendering apparatus. The rendering apparatus includes:
a second sending module, configured to send first animation data by the sending module, where the first animation data is used to describe an animation status of a character at a first time point, and the first time point is a time point at which a terminal device sends the first animation data to a server;
a third receiving module, configured to receive second animation data, where the second animation data is used to describe an animation status of the character at a second time point, and the second time point is a predicted time point at which the terminal device receives the second animation data;
a second fusion module, configured to fuse a play position of an animation sequence of the character at the second time point and a play position of the animation sequence of the character at a third time point to obtain a target play position of the character, where the third time point is a time point at which the terminal device actually receives the second animation data; and
a second rendering module, configured to render a three-dimensional scene based on the target play position of the character to obtain a rendered image, where the three-dimensional scene includes the character.

It should be understood that the rendering apparatus according to the eighth aspect may perform the method steps in the fifth aspect and any one of the implementations of the fifth aspect. Details are not described herein again.

The eighth aspect and any one of the implementations of the eighth aspect correspond to the first aspect and any one of the implementations of the first aspect, respectively. For technical effect corresponding to the eighth aspect and any one of the implementations of the eighth aspect, refer to the technical effect corresponding to the first aspect and any one of the implementations of the first aspect. Details are not described herein again.

According to a ninth aspect, this application provides a terminal device, including a memory and a processor, where the memory is coupled to the processor, the memory stores program instructions, and when the program instructions are executed by the processor, the terminal device is enabled to perform the method according to the second aspect or any one of the possible implementations of the second aspect, or perform the method according to the fifth aspect or any one of the possible implementations of the fifth aspect.

The ninth aspect and any one of the implementations of the ninth aspect correspond to the first aspect and any one of the implementations of the first aspect, respectively. For technical effect corresponding to the ninth aspect and any one of the implementations of the ninth aspect, refer to the technical effect corresponding to the first aspect and any one of the implementations of the first aspect. Details are not described herein again.

According to a tenth aspect, this application provides a server, including a memory and a processor, where the memory is coupled to the processor, the memory stores program instructions, and when the program instructions are executed by the processor, the server is enabled to perform the method according to the third aspect or any one of the possible implementations of the third aspect.

The tenth aspect and any one of the implementations of the tenth aspect correspond to the first aspect and any one of the implementations of the first aspect, respectively. For technical effect corresponding to the tenth aspect and any one of the implementations of the tenth aspect, refer to the technical effect corresponding to the first aspect and any one of the implementations of the first aspect. Details are not described herein again.

According to an eleventh aspect, this application provides a chip, including one or more interface circuits and one or more processors. The one or more processors receive or send data via the one or more interface circuits. When the one or more processors execute computer instructions, the rendering method according to the second aspect or any one of the possible implementations of the second aspect is performed, or the method according to the fifth aspect or any one of the possible implementations of the fifth aspect is performed.

The eleventh aspect and any one of the implementations of the eleventh aspect correspond to the first aspect and any one of the implementations of the first aspect, respectively. For technical effect corresponding to the eleventh aspect and any one of the implementations of the eleventh aspect, refer to the technical effect corresponding to the first aspect and any one of the implementations of the first aspect. Details are not described herein again.

According to a twelfth aspect, this application provides a chip, including one or more interface circuits and one or more processors. The one or more processors receive or send data via the one or more interface circuits. When the one or more processors execute computer instructions, the method according to the third aspect or any one of the possible implementations of the third aspect is performed.

The twelfth aspect and any one of the implementations of the twelfth aspect correspond to the first aspect and any one of the implementations of the first aspect, respectively. For technical effect corresponding to the twelfth aspect and any one of the implementations of the twelfth aspect, refer to the technical effect corresponding to the first aspect and any one of the implementations of the first aspect. Details are not described herein again.

According to a thirteenth aspect, this application provides a computer-readable storage medium. The computer-readable storage medium stores a computer program. When the computer program is run on a computer or a processor, the computer or the processor is enabled to perform the method according to the second aspect or any one of the possible implementations of the second aspect, or the method according to the fifth aspect or any one of the possible implementations of the fifth aspect is performed.

The thirteenth aspect and any one of the implementations of the thirteenth aspect correspond to the first aspect and any one of the implementations of the first aspect, respectively. For technical effect corresponding to the thirteenth aspect and any one of the implementations of the thirteenth aspect, refer to the technical effect corresponding to the first aspect and any one of the implementations of the first aspect. Details are not described herein again.

According to a fourteenth aspect, this application provides a computer-readable storage medium. The computer-readable storage medium stores a computer program. When the computer program is run on a computer or a processor, the computer or the processor is enabled to perform the method according to the third aspect or any one of the possible implementations of the third aspect.

The fourteenth aspect and any one of the implementations of the fourteenth aspect correspond to the first aspect and any one of the implementations of the first aspect, respectively. For technical effect corresponding to the fourteenth aspect and any one of the implementations of the fourteenth aspect, refer to the technical effect corresponding to the first aspect and any one of the implementations of the first aspect. Details are not described herein again.

According to a fifteenth aspect, this application provides a computer program product. The computer program product includes computer instructions. When the computer instructions are executed by a computer or a processor, the computer or the processor is enabled to perform the method according to the second aspect or any one of the possible implementations of the second aspect, or perform the method according to the fifth aspect or any one of the possible implementations of the fifth aspect.

The fifteenth aspect and any one of the implementations of the fifteenth aspect correspond to the first aspect and any one of the implementations of the first aspect, respectively. For technical effect corresponding to the fifteenth aspect and any one of the implementations of the fifteenth aspect, refer to the technical effect corresponding to the first aspect and any one of the implementations of the first aspect. Details are not described herein again.

According to a sixteenth aspect, this application provides a computer program product. The computer program product includes computer instructions. When the computer instructions are executed by a computer or a processor, the computer or the processor is enabled to perform the method according to the third aspect or any one of the possible implementations of the third aspect.

The sixteenth aspect and any one of the implementations of the sixteenth aspect correspond to the first aspect and any one of the implementations of the first aspect, respectively. For technical effect corresponding to the sixteenth aspect and any one of the implementations of the sixteenth aspect, refer to the technical effect corresponding to the first aspect and any one of the implementations of the first aspect. Details are not described herein again.

According to a seventeenth aspect, this application provides an apparatus for storing an encoded bitstream. The apparatus includes a receiver and at least one storage medium. The receiver is configured to receive an encoded bitstream. The at least one storage medium is configured to store the encoded bitstream. The encoded bitstream is generated according to the first aspect or any one of the implementations of the first aspect, or generated according to the second aspect or any one of the implementations of the second aspect, or generated according to the third aspect or any one of the implementations of the third aspect.

The seventeenth aspect and any one of the implementations of the seventeenth aspect correspond to the first aspect and any one of the implementations of the first aspect, respectively. For technical effect corresponding to the seventeenth aspect and any one of the implementations of the seventeenth aspect, refer to the technical effect corresponding to the first aspect and any one of the implementations of the first aspect. Details are not described herein again.

According to an eighteenth aspect, this application provides an apparatus for transmitting an encoded bitstream. The apparatus includes a transmitter and at least one storage medium. The at least one storage medium is configured to store an encoded bitstream, where the encoded bitstream is generated according to the first aspect or any one of the implementations of the first aspect, or generated according to the second aspect or any one of the implementations of the second aspect, or generated according to the third aspect or any one of the implementations of the third aspect. The transmitter is configured to: obtain the encoded bitstream from the storage medium and send the encoded bitstream to a device-side device by using a transmission medium.

The eighteenth aspect and any one of the implementations of the eighteenth aspect correspond to the first aspect and any one of the implementations of the first aspect, respectively. For technical effect corresponding to the eighteenth aspect and any one of the implementations of the eighteenth aspect, refer to the technical effect corresponding to the first aspect and any one of the implementations of the first aspect. Details are not described herein again.

According to a nineteenth aspect, this application provides a system for delivering an encoded bitstream. The system includes: at least one storage medium, configured to store at least one encoded bitstream, where the at least one encoded bitstream is generated according to the first aspect or any one of the implementations of the first aspect, or generated according to the second aspect or any one of the implementations of the second aspect, or generated according to the third aspect or any one of the implementations of the third aspect; and a streaming media device, configured to: obtain a target encoded bitstream from the at least one storage medium and send the target encoded bitstream to a device-side device, where the streaming media device includes a content server or a content delivery server.

The nineteenth aspect and any one of the implementations of the nineteenth aspect correspond to the first aspect and any one of the implementations of the first aspect, respectively. For technical effect corresponding to the nineteenth aspect and any one of the implementations of the nineteenth aspect, refer to the technical effect corresponding to the first aspect and any one of the implementations of the first aspect. Details are not described herein again.

According to a twentieth aspect, this application provides an encoded bitstream, where the encoded bitstream is generated according to the first aspect or any one of the implementations of the first aspect, or generated according to the second aspect or any one of the implementations of the second aspect, or generated according to the third aspect or any one of the implementations of the third aspect.

The twentieth aspect and any one of the implementations of the twentieth aspect correspond to the first aspect and any one of the implementations of the first aspect, respectively. For technical effect corresponding to the twentieth aspect and any one of the implementations of the twentieth aspect, refer to the technical effect corresponding to the first aspect and any one of the implementations of the first aspect. Details are not described herein again.

According to a twenty-first aspect, this application provides an encoded bitstream, where the encoded bitstream includes an encoded first candidate simulation result of a current frame.

For example, a first candidate simulation result may be a first cloth model, an encoded first cloth model may be obtained by a server by encoding the first cloth model, and the first cloth model may be obtained by the server by performing physical simulation on cloth based on physical simulation data uploaded by a terminal device.

According to the twenty-first aspect, the encoded bitstream may further include a second timestamp.

The second timestamp may be a timestamp of the server, and indicates a time at which the server sends the first cloth model (or indicates a time at which the server sends the encoded bitstream).

According to the twenty-first aspect or any one of the foregoing implementations of the twenty-first aspect, the encoded bitstream further includes encoded second animation data.

Second animation data is obtained by the server by performing animation prediction based on first animation data.

The first animation data includes at least one of the following:
an animation sequence identifier of a character;
an animation sequence of the character;
an encoded animation sequence of the character; and
a play position of the animation sequence of the character at a third time point, and a position and an orientation of the character at the third time point.

The second animation data includes a play position of the animation sequence of the character at a first time point, and a skeleton status, a position, and an orientation of the character at the first time point. The twenty-first aspect and any one of the implementations of the twenty-first aspect correspond to the first aspect and any one of the implementations of the first aspect, respectively. For technical effect corresponding to the twenty-first aspect and any one of the implementations of the twenty-first aspect, refer to the technical effect corresponding to the first aspect and any one of the implementations of the first aspect. Details are not described herein again.

According to a twenty-second aspect, this application provides an encoded bitstream, where the encoded bitstream includes physical simulation data.

According to the twenty-second aspect, the encoded bitstream may further include a first timestamp.

The twenty-second aspect and any one of the implementations of the twenty-second aspect correspond to the first aspect and any one of the implementations of the first aspect, respectively. For technical effect corresponding to the twenty-second aspect and any one of the implementations of the twenty-second aspect, refer to the technical effect corresponding to the first aspect and any one of the implementations of the first aspect. Details are not described herein again.

According to a twenty-third aspect, this application provides a computer storage medium. The computer storage medium includes an encoded bitstream, and the encoded bitstream is the encoded bitstream according to the twenty-first aspect or the encoded bitstream according to the twenty-second aspect.

The twenty-third aspect and any one of the implementations of the twenty-third aspect correspond to the first aspect and any one of the implementations of the first aspect, respectively. For technical effect corresponding to the twenty-third aspect and any one of the implementations of the twenty-third aspect, refer to the technical effect corresponding to the first aspect and any one of the implementations of the first aspect. Details are not described herein again.

### BRIEF DESCRIPTION OF DRAWINGS

FIG. 1A illustrates a device-cloud collaborative application scenario;
FIG. 1B(1) and FIG. 1B(2) illustrate a three-dimensional scene;
FIG. 1C illustrates a device-cloud collaboration framework;
FIG. 2A-1 and FIG. 2A-2 illustrate a structure of a device-cloud collaboration system;
FIG. 2B illustrates a device-cloud collaborative rendering process 200;
FIG. 3A illustrates a device-cloud collaborative rendering process 300;
FIG. 3B illustrates a time sequence relationship of time points;
FIG. 3C illustrates an animation prediction process;
FIG. 3D illustrates an interpolation function;
FIG. 4A illustrates a device-cloud collaborative rendering process 400;
FIG. 4B illustrates a physical simulation process;
FIG. 5A and FIG. 5B illustrate a device-cloud collaborative rendering process 500;
FIG. 6 illustrates a device-cloud collaborative rendering process 600;
FIG. 7 illustrates a device-cloud collaborative application scenario;
FIG. 8 illustrates a device-cloud collaborative rendering process;
FIG. 9 illustrates a rendering apparatus 900;
FIG. 10 illustrates a physical simulation apparatus 1000;
FIG. 11 illustrates a rendering apparatus 1100;
FIG. 12 illustrates a structure of an apparatus; and
FIG. 13 illustrates a structure of an electronic device.

### DESCRIPTION OF EMBODIMENTS

The following clearly and completely describes the technical solutions in embodiments of this application with reference to the accompanying drawings in embodiments of this application. It is clear that the described embodiments are a part other than all of embodiments of this application. All other embodiments obtained by a person of ordinary skill in the art based on embodiments of this application without creative efforts shall fall within the protection scope of this application.

The term "and/or" in this specification describes only an association relationship between associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object, a second target object, and the like are used for distinguishing between different target objects, but are not used for describing a particular order of the target objects.

In embodiments of this application, the word "example", "for example", or the like is used to give an example, an illustration, or a description. Any embodiment or design solution described as an "example" or "for example" in embodiments of this application should not be explained as being more preferred or having more advantages than another embodiment or design solution. Exactly, use of the term "example", "for example", or the like is intended to present a related concept in a specific manner.

In descriptions of embodiments of this application, unless otherwise stated, "a plurality of" means two or more. For example, a plurality of processing units refer to two or more processing units, and a plurality of systems refer to two or more systems.

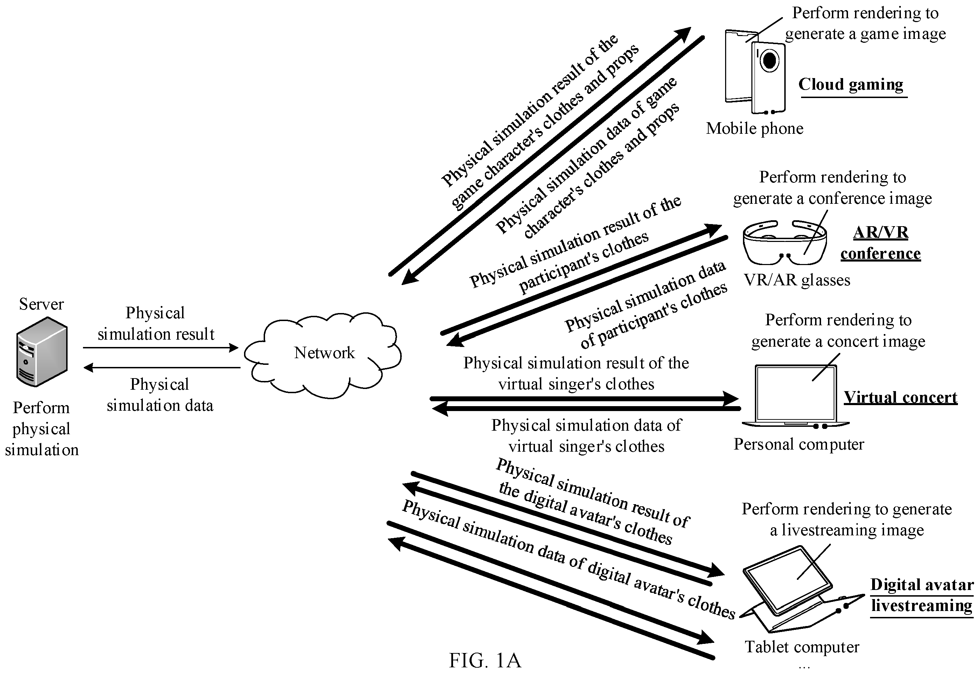

FIG. 1A illustrates a device-cloud collaborative application scenario. A network in FIG. 1A includes but is not limited to a wired network and a wireless network (for example, a cellular network and a Wi-Fi (Wireless Fidelity, wireless fidelity) network). This is not limited in this application.

Refer to FIG. 1A. For example, after receiving a user operation, a terminal device (which may also be referred to as a device or a device-side device) may send physical simulation data to a server (which may also be referred to as a cloud or a cloud server) over the network. Then, the server may perform physical simulation on a physical simulation object based on the physical simulation data to obtain a physical simulation result. Then, the server may send the physical simulation result to the terminal device over the network. Then, the terminal device may perform rendering based on the physical simulation result to obtain a rendered image and display the image.

For example, in a scenario in which a mobile phone is used to play a cloud game in FIG. 1A, the mobile phone may send physical simulation data of game character's clothes and props to the server over the network, and the server may send a physical simulation result of the game character's clothes and props to the mobile phone over the network. In this way, the mobile phone may perform rendering based on the physical simulation result of the game character's clothes and props to obtain a game view (namely, a rendered game view) and display the game view.

For example, in a scenario in which AR/VR glasses are used to join an AR/VR conference in FIG. 1A, the AR/VR glasses may send physical simulation data of participant's clothes to the server over the network, and the server may send a physical simulation result of the participant's clothes to the AR/VR glasses over the network. In this way, the AR/VR glasses may perform rendering based on the physical simulation result of the participant's clothes to obtain an AR/VR conference view (namely, a rendered AR/VR conference view) and display the conference view.

For example, in a scenario in which a personal computer is used to watch a virtual concert in FIG. 1A, the personal computer may send physical simulation data of virtual singer's clothes to the server over the network, and the server may send a physical simulation result of the virtual singer's clothes to the personal computer over the network. In this way, the personal computer may perform rendering based on the physical simulation result of the virtual singer's clothes to obtain a concert view (namely, a rendered concert view) and display the concert view.

For example, in a scenario in which a tablet computer is used to watch digital avatar livestreaming in FIG. 1A, the tablet computer may send physical simulation data of digital avatar's clothes to the server over the network, and the server may send a physical simulation result of the digital avatar's clothes to the tablet computer over the network. In this way, the tablet computer may perform rendering based on the physical simulation result of the digital avatar's clothes to obtain a digital avatar livestreaming view (namely, a rendered livestreaming view) and display the livestreaming view.

It should be understood that this application may be further applied to another scenario. This is not limited in this application.

For example, the character in this application may include virtual objects such as a game character, a participant, a virtual singer, and a digital avatar. The virtual object corresponds to an entity (for example, a person or an animal) that can move autonomously and whose motion is affected by an external force. The physical simulation object in this application is bound to a character, and a motion status of the physical simulation object may change with a change of a motion status of the character. For example, in a cloud gaming scenario, the physical simulation object includes game character's clothes, a game character's prop, and the like. For another example, in an AR/VR conference scenario, the physical simulation object includes participant's clothes. For another example, in a virtual concert scenario, the physical simulation object includes virtual singer's clothes. For another example, in a digital avatar livestreaming scenario, the virtual simulation object includes digital avatar's clothes.

For example, physical simulation (physical simulation) (which may also be referred to as physical simulating) is a technology in which a computer is used to simulate a physical phenomenon in a real world, to generate more vivid effect of interacting with the world in an animation or a game. The physical simulation may include rigid body simulation (which may be used to simulate rotation, translation, and the like of a rigid object), elastic body simulation (which may be used to simulate motion, deformation, and the like of an elastic object), cloth simulation, and fluid simulation.

For example, rendering (Rendering) may be a process of displaying a three-dimensional model of an object (for example, a character, character's clothes, or a character's prop) in a three-dimensional scene on a two-dimensional plane.

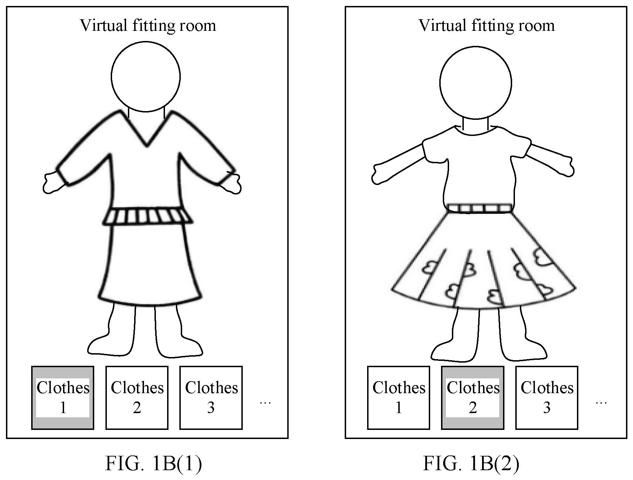

FIG. 1B(1) and FIG. 1B(2) illustrate a three-dimensional scene.

The three-dimensional scene shown in FIG. 1B(1) and FIG. 1B(2) is a virtual fitting room, and the virtual fitting room includes a character and character's clothes (namely, a physical simulation object).

For example, a user may try on clothes in the virtual fitting room. For example, clothes worn by the character currently are clothes 1, as shown in FIG. 1B(1). When the user wants to try on clothes 2, the user may tap an option of clothes 2, and a terminal device may send physical simulation data of the clothes 2 to a server in response to operation behavior of the user. The server may perform physical simulation based on the physical simulation data of the clothes 2, to generate a physical simulation result, namely, a cloth model of the clothes 2, and send the cloth model of the clothes 2 to the terminal device, and the terminal device performs rendering based on the cloth model of the clothes 2 to obtain a rendered image. In addition, the rendered image, namely, effect of the character trying on the clothes 2, as shown in FIG. 1B(2) may be displayed.

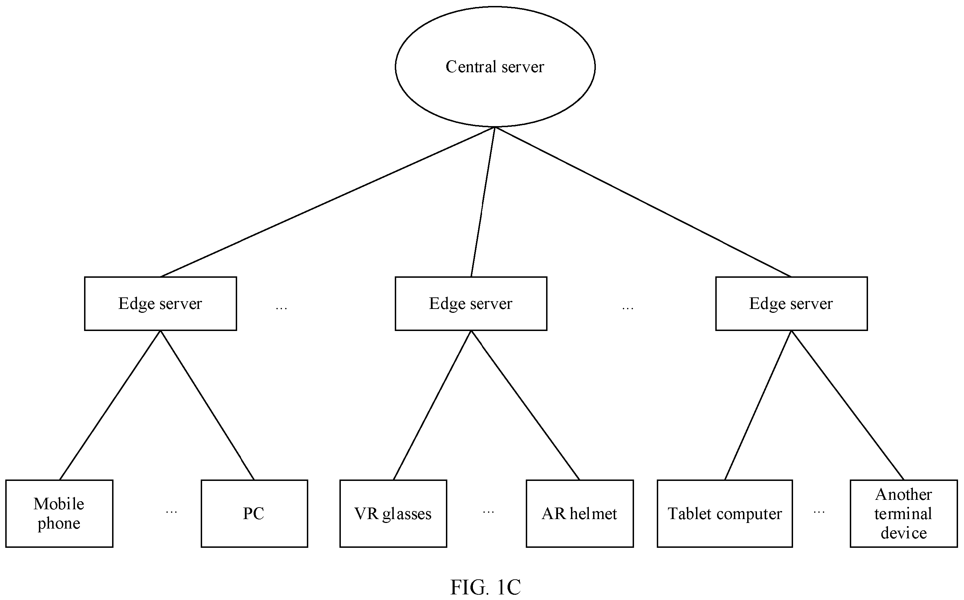

FIG. 1C illustrates a device-cloud collaboration framework. A device-cloud collaboration system shown in FIG. 1C may include a central server, an edge server, and a terminal device.

For example, the central server in FIG. 1C is one of the servers in FIG. 1A. The central server may be a single server or a server cluster. This is not limited in this application. A specific implementation form of the server in this application may be a cloud server, a physical (independent) server, a site cluster server, or the like. This is not limited in this application. When the server is used in different scenarios, the server in this application may also be referred to as a game server, a video server, a livestreaming server, a VR/AR conference server, a virtual server, and the like based on the scenarios in which the server is used. This is not limited in this application.

Refer to FIG. 1C. For example, the terminal device in FIG. 1C includes but is not limited to a personal computer (Personal Computer, PC), a computer workstation, a smartphone, a tablet computer, a server, an intelligent camera, an intelligent vehicle, another type of cellular phone, a media consumption device, a wearable device (for example, an AR helmet or VR glasses), a set-top box, a game console, or the like. This is not limited in this application.

Refer to FIG. 1C. For example, the terminal device, for example, a mobile phone, a personal computer (Personal Computer, PC), VR glasses, an AR helmet, a tablet computer, or another terminal device may send physical simulation data to the central server (for example, the game server) via the edge server. Then, the central server may perform physical simulation on physical simulation objects based on the physical simulation data to obtain physical simulation results. Then, the central server distributes the physical simulation results to the terminal devices via the edge server. Then, the terminal device may render a three-dimensional scene based on the physical simulation result to obtain a rendered image and display the image.

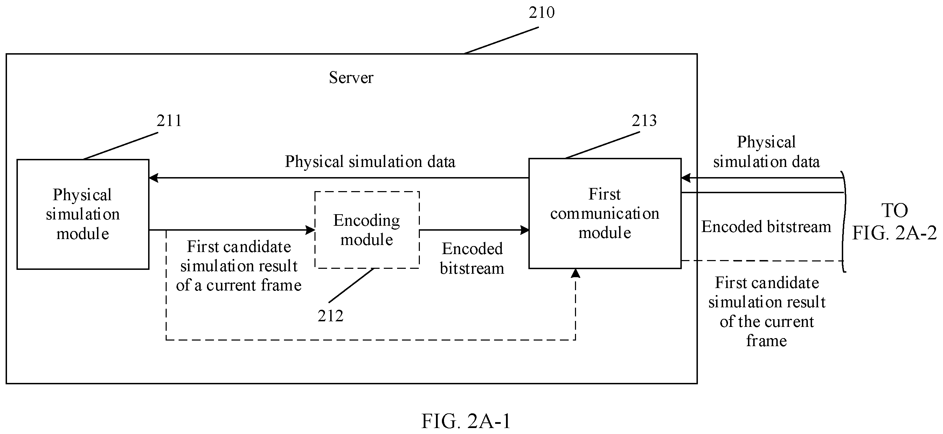

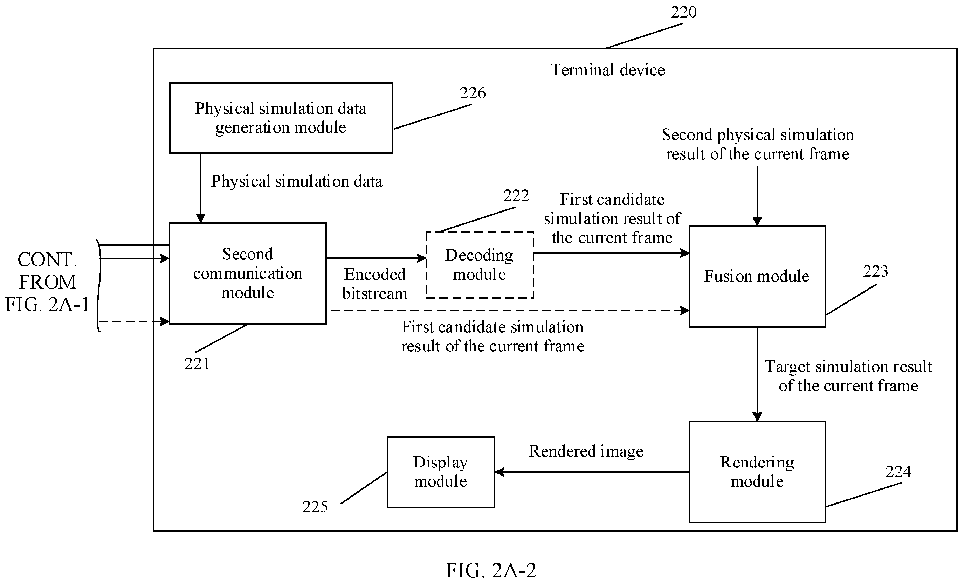

FIG. 2A-1 and FIG. 2A-2 illustrate a structure of a device-cloud collaboration system. The device-cloud collaboration system in FIG. 2A-1 and FIG. 2A-2 may include a server 210 and a terminal device 220.

Refer to FIG. 2A-1. For example, the server 210 may include a physical simulation module 211, an encoding module 212, and a first communication module 213. It should be noted that the encoding module 212 is an optional module.

It should be understood that the server 210 in FIG. 2A-1 is merely an example in this application. The server 210 in this application may include more or fewer modules/units than those shown in FIG. 2A-1. This is not limited in this application.

Refer to FIG. 2A-2. For example, the terminal device 220 may include a second communication module 221, a decoding module 222, a fusion module 223, a rendering module 224, a display module 225, and a physical simulation data generation module 226. It should be noted that the decoding module 222 is an optional module.

It should be understood that the terminal device 220 in FIG. 2A-2 is merely an example in this application. The terminal device 220 in this application may include more or fewer modules/units than those shown in FIG. 2A-2. This is not limited in this application.

For example, the physical simulation module 211 may be implemented by a central processing unit (Central Processing Unit, CPU), or may be implemented by a graphics processing unit (Graphics Processing Unit, GPU). It should be understood that the physical simulation module 211 may alternatively be implemented by another general-purpose processor or a dedicated chip. This is not limited in this application.

For example, the encoding module 212 may be implemented by a CPU, or may be implemented by both a CPU and a GPU. It should be understood that the encoding module 212 may alternatively be implemented by another general-purpose processor or a dedicated chip. This is not limited in this application.

For example, the decoding module 222 may be implemented by a CPU, or may be implemented by both a CPU and a GPU. It should be understood that the decoding module 222 may alternatively be implemented by another general-purpose processor or a dedicated chip. This is not limited in this application.

For example, the physical simulation data generation module 226 may be implemented by a CPU. It should be understood that the physical simulation data generation module 226 may alternatively be implemented by another general-purpose processor or a dedicated chip. This is not limited in this application.

For example, the fusion module 223 may be implemented by a CPU. It should be understood that the fusion module 223 may alternatively be implemented by another general-purpose processor or a dedicated chip. This is not limited in this application.

For example, the rendering module 224 may be implemented by a GPU. For example, the rendering model 224 may be a rendering engine in the GPU. It should be understood that the rendering module 224 may alternatively be implemented by another general-purpose processor or a dedicated chip. This is not limited in this application.

The following describes a device-cloud collaborative rendering process with reference to FIG. 2A-1 and FIG. 2A-2 by using a cloud gaming scenario as an example.

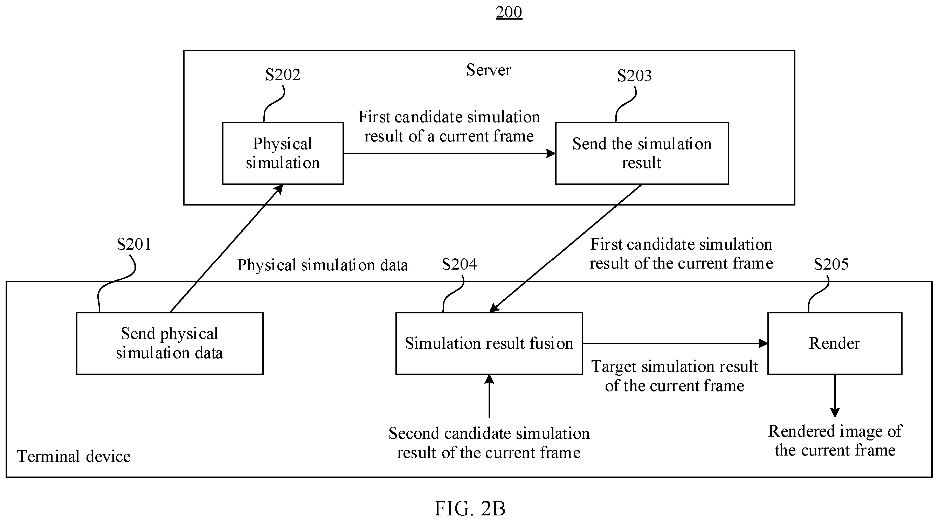

FIG. 2B illustrates a device-cloud collaborative rendering process 200.

S201: A terminal device sends physical simulation data to a server.

For example, after the terminal device 220 receives a user operation, the physical simulation data generation module 226 may generate the physical simulation data, and output the physical simulation data to the second communication module 221. Then, the second communication module 221 may send the physical simulation data to the first communication module 213.

For example, the user operation may include at least one of adjusting a position of a character, adjusting an orientation of the character, or adjusting an action of the character (for example, walking, running, or jumping, which may also be understood as adjusting an animation sequence of the character). In other words, when a user performs any one or more of the foregoing user operations, the terminal device may be triggered to send the physical simulation data to the server.

For example, in a cloud gaming scenario, a physical simulation object may be game character's clothes (which may also be referred to as cloth), a game character's prop (which may also be referred to as a rigid body), and the like.

For example, the physical simulation data may include data required for physical simulation (or in other words, the physical simulation data is data that affects a motion status of the physical simulation object). For example, the physical simulation data may include but is not limited to a physical simulation parameter, data processed through physical simulation, and the like. This is not limited in this application. The physical simulation parameter may include at least one of the following: an external force parameter (for example, a wind force parameter, and a position and an orientation of an external collision body), animation data of a character (which may be used to describe an animation status of the character, for example, a position and an orientation of the character (after adjustment), and a play position corresponding to an animation sequence of the character), status information of a physical simulation object (for example, a position and an orientation of a rigid body (after adjustment) (which may be understood as a position and an orientation of a center of the rigid body)), and the like. This is not limited in this application. The data processed through physical simulation may include a cloth model, a rigid body model, and the like. This is not limited in this application.

For example, in the cloud gaming scenario, the physical simulation data includes a wind force parameter, description information of an object that may collide with game character's clothes, and animation data of the character.

For example, in the cloud gaming scenario, the physical simulation data includes a wind force parameter, description information of an object that may collide with game character's clothes, animation data of the character, and a cloth model corresponding to the game character's clothes.

For example, in the cloud gaming scenario, the physical simulation data includes animation data of a game character, and a position and an orientation of a game character's prop.

For example, in the cloud gaming scenario, the physical simulation data includes animation data of a game character, a position and an orientation of a game character's prop, and a rigid body model corresponding to the game character's prop.

S202: The server performs physical simulation on a physical simulation object based on the physical simulation data to obtain a first candidate simulation result of a current frame.

For example, after receiving the physical simulation data, the first communication module 213 may output the physical simulation data to the physical simulation module 211. Then, the physical simulation module 211 may perform physical simulation on the physical simulation object based on the physical simulation data to obtain a physical simulation result of the current frame.

For ease of subsequent description, the physical simulation result of the current frame generated by the server may be referred to as the first candidate simulation result of the current frame. For example, the first candidate simulation result of the current frame is a simulation result corresponding to a first time point, and the first time point may be a predicted time point at which the terminal device receives the first candidate simulation result of the current frame.

For example, if the physical simulation object is cloth, the first candidate simulation result of the current frame may be a first cloth model of the current frame, namely, a cloth model corresponding to the first time point (where the cloth model corresponding to the first time point may be used to describe a motion status of the cloth at the first time point). For another example, if the physical simulation object is a rigid body, the first candidate simulation result of the current frame may be a position and an orientation of a prop in the current frame, namely, a position and an orientation of the prop at the first time point.

For example, the physical simulation module 211 may include a physical simulation engine, and the physical simulation data may be input into the physical simulation engine. The physical simulation engine performs physical simulation on the physical simulation object based on the physical simulation data to obtain the first candidate simulation result of the current frame.

Because it takes specific time to transmit to-be-exchanged data from the terminal device to the server (or from the server to the terminal device), the time point (namely, the first time point) at which the terminal device receives the first candidate simulation result of the current frame may be predicted first based on a bandwidth and a data volume of the first candidate simulation result of the current frame. Then, a physical simulation result corresponding to the first time point is generated as the first candidate simulation result of the current frame. In this way, a delay in a motion status of the physical simulation object can be reduced, and a probability of frame freezing can be reduced.

S203: The server sends the first candidate simulation result of the current frame to the terminal device.

For example, whether to encode the first candidate simulation result of the current frame may be determined based on the data volume of the first candidate simulation result of the current frame or a type of the physical simulation object. For example, when the data volume of the first candidate simulation result of the current frame is greater than a data volume threshold, it may be determined to encode the first candidate simulation result of the current frame; or when the data volume of the first candidate simulation result of the current frame is less than or equal to the data volume threshold, it may be determined not to encode the first candidate simulation result of the current frame. For another example, when the physical simulation object is cloth, it may be determined to encode the first candidate simulation result of the current frame; when the physical simulation object is a rigid body, it may be determined not to encode the first candidate simulation result of the current frame; and so on. This is not limited in this application. The data volume threshold may be set as required. This is not limited in this application.

For example, in a possible manner, when the first candidate simulation result of the current frame is the first cloth model of the current frame, the physical simulation module 211 may output the first cloth model of the current frame to the encoding module 212, and the encoding module 212 encodes the first cloth model of the current frame to obtain an encoded bitstream (the encoded bitstream includes an encoded first cloth model of the current frame). Then, the encoding module 212 may output the encoded bitstream to the first communication module 213. Then, the first communication module 213 may send the encoded bitstream to the second communication module 221.

For example, in a possible manner, when the first candidate simulation result of the current frame is a position and an orientation of a rigid body in the current frame, the physical simulation module 211 may output the position and orientation of the rigid body in the current frame to the first communication module 213. Then, the first communication module 213 may send the position and orientation of the rigid body in the current frame to the second communication module 221.

S204: The terminal device fuses a second candidate simulation result of the current frame and the first candidate simulation result of the current frame to obtain a target simulation result of the current frame.

For example, in a possible manner, the second communication module 221 receives the encoded bitstream. Then, the second communication module 221 may output the encoded bitstream to the decoding module 222. Then, the decoding module 222 may decode the encoded bitstream to obtain a reconstruction result of the first candidate simulation result of the current frame, and output the reconstruction result of the first candidate simulation result of the current frame to the fusion module 223.

For example, in a possible manner, the second communication module 221 receives the first candidate simulation result of the current frame. Then, the second communication module 221 may output the first candidate simulation result of the current frame to the fusion module 223.

Then, the fusion module 223 may fuse the second candidate simulation result of the current frame and the reconstruction result of the first candidate simulation result of the current frame (or the first candidate simulation result of the current frame) to obtain the target simulation result of the current frame.

The second candidate simulation result of the current frame is a simulation result corresponding to a second time point, and the second time point may be a time point at which the terminal device actually receives the second candidate simulation result of the current frame.

There may be a difference between the first time point and the second time point, the second time point is closer to a real time point at which the terminal device plays a rendered image of the current frame than the first time point. Therefore, fusing the second candidate simulation result of the current frame and the first candidate simulation result of the current frame can enable the motion status of the physical simulation object to be closer to an actual motion status at a real time point and corresponding to the current frame. In addition, fusing the second candidate simulation result of the current frame and the first candidate simulation result of the current frame may be understood as performing a compromise between the motion status of the physical simulation object at the first time point and the motion status of the physical simulation object at the second time point. When the first time point is after the second time point, the first time point is farther away from a real time point at which the terminal device plays a rendered image of a previous frame. Performing a compromise between the motion status of the physical simulation object at the first time point and the motion status of the physical simulation object at the second time point can enable a change between the motion status of the physical simulation object in the current frame and the motion status in the previous frame to be smoother, so that a user can view the motion status of the physical simulation object in images of two adjacent frames more smoothly. When the first time point is before the second time point, this results in a delay in the motion status of the physical simulation object. Performing a compromise between the motion status of the physical simulation object at the first time point and the motion status of the physical simulation object at the second time point can reduce the delay in the motion status of the physical simulation object, thereby reducing the probability of frame freezing.

It should be noted that the first time point may be a predicted time point at which the terminal device starts to receive the first candidate simulation result of the current frame, or may be a predicted time point at which the terminal device completes receiving the first candidate simulation result of the current frame. (A time difference between the two cases is very small, and may be ignored in some scenarios. Therefore, the first time point may alternatively be any time point between time points corresponding to the two cases.) Alternatively, the first time point may be a predicted time point at which the terminal device starts to receive an encoded bitstream, or may be a predicted time point at which the terminal device completes receiving an encoded bitstream, or may be a predicted time point at which the terminal device obtains the reconstruction result of the first candidate simulation result of the current frame by decoding the encoded bitstream. (A time difference between the three cases is very small, and may be ignored in some scenarios. Therefore, the first time point may alternatively be any time point between any two of time points corresponding to the three cases.)

It should be noted that the second time point may be a time point at which the terminal device actually starts to receive the first candidate simulation result of the current frame, or may be a time point at which the terminal device actually completes receiving the first candidate simulation result of the current frame. (A time difference between the two cases is very small, and may be ignored in some scenarios. Therefore, the second time point may alternatively be any time point between time points corresponding to the two cases.) Alternatively, the second time point may be a time point at which the terminal device actually starts to receive the encoded bitstream, or may be a time point at which the terminal device actually completes receiving the encoded bitstream, or may be a time point at which the terminal device obtains the reconstruction result of the first candidate simulation result of the current frame by decoding the encoded bitstream. (A time difference between the three cases is very small, and may be ignored in some scenarios. Therefore, the second time point may alternatively be any time point between any two of time points corresponding to the three cases.)

In a possible manner, the second candidate simulation result of the current frame is obtained by the terminal device by performing physical simulation based on the physical simulation data. It should be noted that complexity of physical simulation (which may be referred to as "simple physical simulation") performed by the terminal device to obtain the second candidate simulation result of the current frame is lower than complexity of physical simulation (which may be referred to as "complex physical simulation") performed by the server to obtain the first candidate simulation result of the current frame. Alternatively, a computational capability required for performing physical simulation by the terminal device to obtain the second candidate simulation result of the current frame is lower than a computational capability required for performing physical simulation by the server to obtain the first candidate simulation result of the current frame. Correspondingly, precision of the second candidate simulation result of the current frame is lower than precision of the first candidate simulation result of the current frame.

In a possible manner, the second candidate simulation result of the current frame is generated by the terminal device through pre-baking, or is generated by the server (or a third-party device) through pre-baking and sent to the terminal device. The terminal device (or the server or the third-party device) may perform physical simulation (physical simulation in a pre-baking process, which has same complexity as physical simulation performed by the server in S302, and may also be referred to as "complex physical simulation") for N (N is a positive integer) times in advance to obtain N third candidate simulation results. The N third candidate simulation results one-to-one correspond to N preset user operations. Then, a third candidate simulation result that matches a user operation received this time is selected from the N third candidate simulation results as the second candidate simulation result of the current frame. The third candidate simulation result that matches the user operation received this time may be a third candidate simulation result that corresponds to the preset user operation and that is the same as or closest to the user operation received this time.

S205: Render a three-dimensional scene based on the target simulation result of the current frame to obtain a rendered image of the current frame.

For example, the rendering module 224 may render the physical simulation object based on the physical simulation result to obtain a rendered image and output the rendered image to the display module 225, and the display module 225 displays the rendered image.

For example, the rendering module 224 may include a rendering engine. For example, vertex data and material data of a character model, and the target simulation result of the current frame may be input into the rendering engine, and the rendering engine starts a rendering pipeline to process the vertex data and the material data of the character model, and the target simulation result of the current frame to obtain the rendered image of the current frame.

For example, the three-dimensional scene may include a character and a physical simulation object bound to the character. It should be understood that the three-dimensional scene may further include another object (for example, a character whose position, orientation, and action are not adjusted by the user, or another physical simulation object). This is not limited in this application.

For example, animation data of the character in the physical simulation data may be animation data of the character at a third time point (which is subsequently referred to as first animation data, and may be used to describe an animation status of the character at the third time point). For example, the third time point may be a time point at which the terminal device sends the first animation data, and the third time point is before the first time point and the second time point. Because it takes specific time to transmit to-be-exchanged data from the terminal device to the server (or from the server to the terminal device), the server may predict, based on the first animation data in the physical simulation data, animation data of the character at a time point (namely, the first time point) after the third time point, to reduce a delay in an action of the character. In addition, the first candidate simulation result of the current frame is generated based on second animation data, so that a delay in a motion status of the physical simulation object can be reduced.

In addition, the server may further fuse predicted animation data of the character at the first time point and animation data that is of the character at the second time point and that is determined by the terminal device, so that an action of the character in two adjacent frames is smoother. In addition, the terminal device further fuses the first candidate simulation result of the current frame and the second candidate simulation result of the current frame. In this way, it can be ensured that the motion status of cloth adapts to an action of the character, thereby preventing a clipping phenomenon.

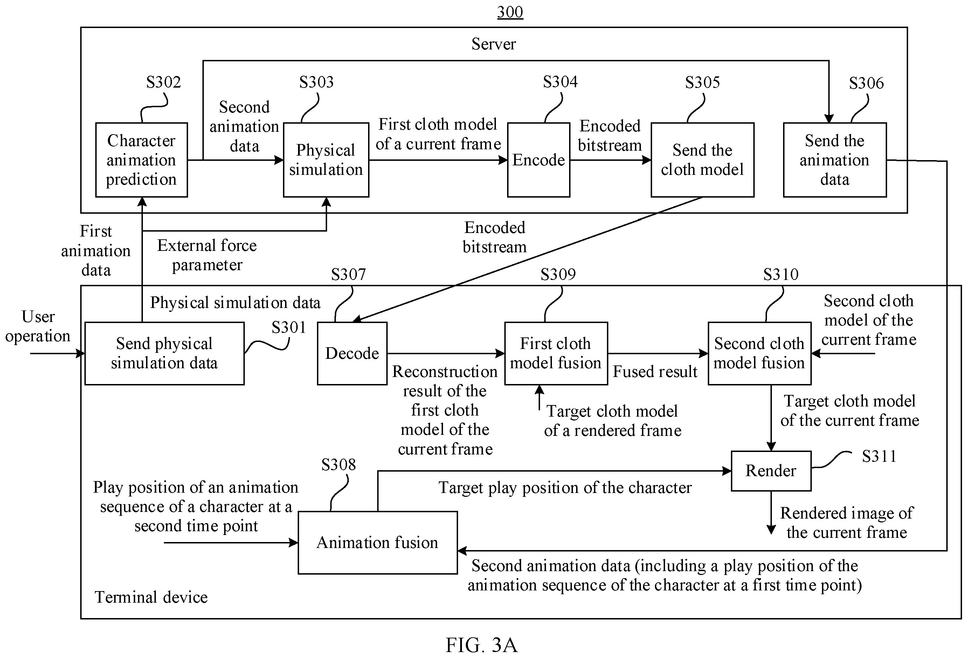

FIG. 3A illustrates a device-cloud collaborative rendering process 300. A physical simulation object in the rendering process 300 is cloth, and physical simulation is cloth simulation. In addition, a user operation received by a terminal device may include any one or more of adjusting a position of a character, adjusting an orientation of the character, and adjusting an action (for example, walking, running, or jumping) of the character.

S301: The terminal device sends physical simulation data to a server, where the physical simulation data includes an external force parameter and first animation data.

For example, the first animation data is used to describe an animation status of the character at a third time point.

For example, when the user operation includes adjusting the action of the character, the first animation data includes at least one of an animation sequence identifier of the character, an animation sequence of the character, or an encoded animation sequence of the character. In this case, the animation sequence identifier of the character refers to an adjusted animation sequence identifier of the character, and the animation sequence of the character is an adjusted animation sequence of the character.

For example, when the user operation does not include adjusting the action of the character, in a possible manner, the first animation data includes a play position of the animation sequence of the character at the third time point, and a position and an orientation of the character at the third time point.

For example, when the user operation does not include adjusting the action of the character, in a possible manner, the first data includes: a play position of the animation sequence of the character at the third time point, a position and an orientation of the character at the third time point, and at least one of an animation sequence identifier of the character, an animation sequence of the character, or an encoded animation sequence of the character. In this case, the animation sequence identifier of the character refers to an unadjusted animation sequence identifier of the character, and the animation sequence of the character is an unadjusted animation sequence of the character.

For example, the animation sequence identifier may uniquely identify an animation sequence. For example, an animation sequence of running corresponds to an animation sequence identifier 1, an animation sequence of jumping corresponds to an animation sequence identifier 2, and an animation sequence of walking corresponds to an animation sequence identifier 3.

For example, the play position of the animation sequence of the character at the third time point may be a frame identifier of a played animation frame of the animation sequence of the character at the third time point, or a timestamp of a correspondingly played animation frame of the animation sequence of the character at the third time point.

For example, the position and the orientation of the character at the third time point may be understood as a position and an orientation of the character in the correspondingly played animation frame of the animation sequence of the character at the third time point.

It should be noted that the third time point may be a time point at which the terminal device starts to send the first animation data, or may be a predicted time point at which the terminal device completes sending the first animation data. (A time difference between the two cases is very small, and may be ignored in some scenarios. Therefore, the third time point may alternatively be any time point between time points corresponding to the two cases.) This is not limited in this application.

S302: The server predicts second animation data based on the first animation data in the physical simulation data.

For example, the second animation data is used to describe an animation status of the character at a first time point.

For example, the second animation data includes a play position of the animation sequence of the character at the first time point, and a skeleton status, a position, and an orientation of the character at the first time point.

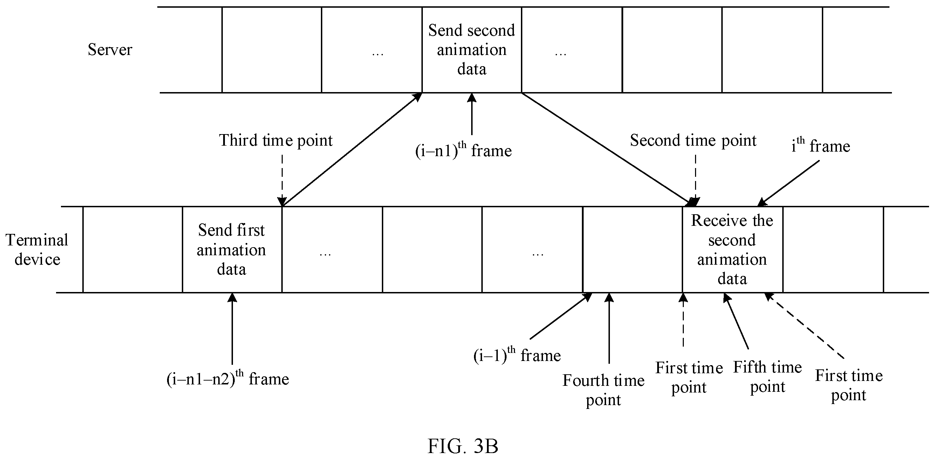

FIG. 3B illustrates a time sequence relationship of time points.

Refer to FIG. 3B. For example, one rectangle represents one frame, and time consumed by one frame may be represented by *t_{c}* , for example, *t_{c}* = 30*ms* .

Refer to FIG. 3B. For example, the terminal device sends the first animation data to the server at a time point (namely, the third time point) of an (i-n1-n2)^{th} frame. After completing predicting the second animation data (namely, animation data of an i^{th} frame) in the (i-n1)^{th} frame, the server may send the second animation data to the terminal device. The terminal device receives the second animation data at a time point (namely, a second time point) of the i^{th} frame. The i^{th} frame may be considered as a current frame. i, n1, and n2 are all positive integers. In other words, the third time point is before the first time point and the second time point.

Still refer to FIG. 3B. For example, the second animation data predicted by the server is animation data of the i^{th} frame at the first time point. The first time point may be before the second time point, or may be after the second time point. This is not limited in this application.

It should be noted that FIG. 3B shows a time sequence relationship between the first time point, the second time point, and the third time point, and does not represent an actual interval between the first time point, the second time point, and the third time point.

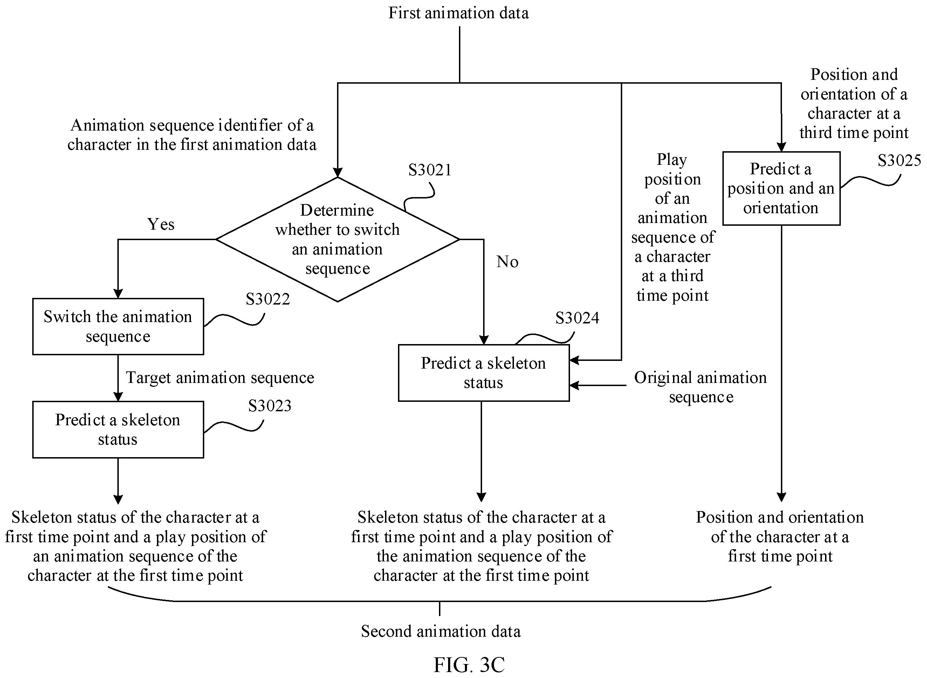

FIG. 3C illustrates an animation prediction process. FIG. 3C is described by using an example in which the first animation data includes the play position of the animation sequence of the character at the third time point, the position and the orientation of the character at the third time point, and the animation sequence identifier of the character.

Refer to FIG. 3C. For example, S302 may be performed with reference to the following steps S3021 to S3025.

S3021: The server determines, based on the animation sequence identifier of the character in the first animation data, whether an animation sequence needs to be switched.

For example, the server may determine whether an animation sequence identifier of the character received this time is the same as an animation sequence identifier of the character received last time. When the animation sequence identifier of the character received this time is different from the animation sequence identifier of the character received last time, it may be determined that the animation sequence needs to be switched, and S3022 is performed. When the animation sequence identifier of the character received this time is the same as the animation sequence identifier of the character received last time, it may be determined that the animation sequence does not need to be switched, and S3024 is performed.

For example, if the animation sequence identifier of the character received last time is the identifier 1 (corresponding to the animation sequence of running), and the animation sequence identifier of the color received this time is the identifier 2 (corresponding to the animation sequence of jumping), it may be determined that the animation sequence needs to be switched.

For example, if the animation sequence identifier of the character received last time is the identifier 2 (corresponding to the animation sequence of jumping), and the animation sequence identifier of the color received this time is the identifier 2 (corresponding to the animation sequence of jumping), it may be determined that the animation sequence does not need to be switched.

S3022: The server switches an original animation sequence to a target animation sequence, where the target animation sequence corresponds to the animation sequence identifier of the character in the first animation data.

For example, the original animation sequence may be an animation sequence corresponding to the animation sequence identifier of the character received last time.

For example, the target animation sequence may be an animation sequence corresponding to the animation sequence identifier of the character received this time.

For example, the animation sequence identifier of the character received last time is the identifier 1, that is, the original animation sequence is the animation sequence of running, and the animation sequence identifier of the color received this time is the identifier 2, that is, the target animation sequence is the animation sequence of jumping. In other words, the server switches the animation sequence of running to the animation sequence of jumping.

S3023: The server predicts the skeleton status of the character at the first time point and the play position of the animation sequence of the character at the first time point based on the target animation sequence.

For example, the target animation sequence, a current time point, and the first time point may be input into an animation algorithm, and the animation algorithm predicts the skeleton status of the character at the first time point and the play position of the animation sequence of the character at the first time point. The skeleton status includes a position and a direction of a skeleton node.

For example, the target animation sequence may include a plurality of key frames, and each key frame includes a skeleton status of the character. For example, a process in which the animation algorithm predicts the skeleton status of the character at the first time point may be as follows: Frame interpolation may be first performed on the target animation sequence, that is, one or more animation frames are interpolated between two adjacent key frames. Then, the play position of the animation sequence of the character at the first time point is predicted from the target animation sequence obtained through frame interpolation based on a difference between the current time point and the first time point. Then, an animation frame corresponding to the play position of the animation sequence of the character at the first time point is searched for from the target animation sequence obtained through frame interpolation, where the animation frame includes the skeleton status of the character at the first time point.

S3024: The server predicts the skeleton status of the character at the first time point and the play position of the animation sequence of the character at the first time point based on the original animation sequence and the play position of the animation sequence of the character at the third time point.

For example, the original animation sequence, the play position of the animation sequence of the character at the third time point, the third time point, and the first time point may be input into the animation algorithm, and the animation algorithm predicts the skeleton status of the character at the first time point and the play position of the animation sequence of the character at the first time point.

Specifically, the play position *p* of the animation sequence of the character at the first time point may be predicted according to the following formula (1): $p = {p}_{0} + \left(T1-T3+α*{\hat{t}}_{c}\right) * ν$ (1)

In Formula (1), *p*₀ represents the play position of the animation sequence of the character at the third time point; *t̂_{c}* represents predicted time consumed by each frame on a device side, and is generally average time consumed by the first several frames on the device side; *α* represents a coefficient (which may be set to a value between 1.5 and 2); and *v* represents an animation play rate. *T*1 is the first time point, and *T*3 is the third time point.

Then, an animation frame corresponding to the play position *p* of the animation sequence of the character at the first time point may be searched for from the original animation sequence obtained through frame interpolation, where the animation frame includes the skeleton status of the character at the first time point.

S3025: The server predicts the position and the orientation of the character at the first time point based on the position and the orientation of the character at the third time point.

For example, the position and the orientation of the character at the third time point and the first time point may be input into the animation algorithm, and the animation algorithm predicts the position and the orientation of the character at the first time point based on the position and the orientation of the character at the third time point.

For example, an execution sequence of S3025 and any one of steps S3021 to S3024 is not limited in this application.

S303: The server performs physical simulation on the physical simulation object based on the external force parameter and the second animation data to obtain a first cloth model of a current frame.

For example, the external force parameter and the second animation data may be input into a physical simulation engine, and the physical simulation engine performs cloth simulation on the cloth based on the external force parameter and the second animation data to obtain the first cloth model of the current frame. The first cloth model of the current frame may be used to represent a motion status of the cloth at the first time point.

S304: The server encodes the first cloth model of the current frame to obtain an encoded bitstream.

For example, the encoding module 212 of the server may encode the first cloth model of the current frame to obtain encoded first cloth model of the current frame and encapsulate the encoded first cloth model into the encoded bitstream.

S305: The server sends the encoded bitstream.

For example, the server may send the encoded bitstream that carries the encoded first cloth model of the current frame.

S306: The server sends the second animation data.

For example, the server may further send second animation data.

It should be noted that an execution sequence of S305 and S306 is not limited in this application.

S307: The terminal device decodes the encoded bitstream to obtain a reconstruction result of the first cloth model of the current frame.

For example, the terminal device may receive the encoded bitstream that is sent by the server and that carries the encoded first cloth model of the current frame.

For example, the terminal device may decode the encoded first cloth model of the current frame in the encoded bitstream to obtain the reconstruction result of the first cloth model of the current frame.

It should be noted that the reconstruction result of the first cloth model of the current frame may be the same as or different from the first cloth model of the current frame, depending on whether the server performs lossy encoding or lossless encoding on the first cloth model of the current frame.

S308: The terminal device fuses a play position of the animation sequence of the character at the second time point and the play position of the animation sequence of the character at the first time point to obtain a target play position of the character.

For example, the terminal device may perform weighted calculation on the play position of the animation sequence of the character at the second time point and the play position of the animation sequence of the character at the first time point to obtain the target play position of the character.

For example, the terminal device may perform weighted calculation on the play position of the animation sequence of the character at the second time point and the play position of the animation sequence of the character at the first time point based on a first weight and a second weight to obtain the target play position of the character.

For example, the first weight corresponds to the play position of the animation sequence of the character at the first time point, and the second weight corresponds to the play position of the animation sequence of the character at the second time point; and the first weight is inversely proportional to a difference between the first time point and the second time point, and the second weight is directly proportional to the difference between the first time point and the second time point. In other words, a larger difference between the first time point and the second time point indicates higher reliability of the play position of the animation sequence of the character at the second time point; and a smaller difference between the first time point and the second time point indicates higher reliability of the play position of the animation sequence of the character at the first time point. In this way, a jump or instantaneous movement of the action of the character on the device side can be prevented, so that the action of the character in two adjacent frames is more natural and smoother.

For example, the second weight is a difference between 1 and the first weight.

For example, the target play position *p*₂ of the character may be determined according to the following formulas (2) to (4): ${p}_{2} = {f}_{mix} \left(p, {p}_{1}, m\right)$ (2) ${f}_{mix} \left(a, b, c\right) = c * a + \left(1-c\right) * b$ (3) $m = {f}_{clamp} \left(\frac{{T}_{2} - {T}_{1}}{2.5 {t}_{c}}, 0.2, 1.0\right)$ (4) ${f}_{clamp} \left(a, b, c\right) = min \left(max\left(a, b\right),c\right)$ (5)

Herein, *p*₁ is the play position of the animation sequence of the character at the second time point, *p* is the play position of the animation sequence of the character at the first time point, and *t_{c}* represents predicted time consumed by each frame (a previous frame) on the device side. All constants in Formula (4) may be empirical values.

For example, a position and an orientation of the character at the second time point and the position and the orientation of the character at the first time point may also be fused to obtain a target position and a target orientation of the character. For details, refer to the description in S308. Details are not described herein again.

S309: The terminal device fuses a target cloth model of a rendered frame and the reconstruction result of the first cloth model of the current frame to obtain a fused result.

For example, the terminal device may perform weighted calculation on the target cloth model of the rendered frame and the reconstruction result of the first cloth model of the current frame to obtain the fused result. Specifically, the terminal device may perform weighted calculation on the target cloth model of the rendered frame and the reconstruction result of the first cloth model of the current frame based on a third weight and a fourth weight to obtain the fused result.

For example, the third weight corresponds to the target cloth model of the rendered frame, and the fourth weight corresponds to the reconstruction result of the first cloth model of the current frame; and the third weight is inversely proportional to a difference between a fourth time point and a fifth time point, and the fourth weight is directly proportional to the difference between the fourth time point and the fifth time point. The fourth time point is a time point at which the terminal device actually receives a first cloth model of the rendered frame, and the fifth time point is a time point at which the terminal device fuses a second cloth model of the current frame and the first cloth model of the current frame. In other words, a larger difference between the fourth time point and the fifth time point indicates a smaller weight of the target cloth model of the rendered frame; and a smaller difference between the fourth time point and the fifth time point indicates a larger weight of the target cloth model of the rendered frame. In this way, a jump or instantaneous movement of the motion status of the cloth on the device side can be prevented, so that the motion status of the cloth in two adjacent frames is more natural and smoother.

For example, the rendered frame may be a previous frame of the current frame.

It should be noted that the fourth time point may be a time point at which the terminal device actually starts to receive the first cloth model of the rendered frame, or may be a time point at which the terminal device actually completes receiving the first cloth model of the rendered frame. (A time difference between the two cases is very small, and may be ignored in some scenarios. Therefore, the fourth time point may alternatively be any time point between time points corresponding to the two cases.) Alternatively, the fourth time point may be a time point at which the terminal device actually starts to receive the encoded bitstream, or may be a time point at which the terminal device actually completes receiving the encoded bitstream, or may be a time point at which the terminal device obtains the reconstruction result of the first cloth model of the rendered frame by decoding the encoded bitstream. (A time difference between the three cases is very small, and may be ignored in some scenarios. Therefore, the fourth time point may alternatively be any time point between time points in the three cases.)

It should be noted that the fifth time point may be a time point at which the terminal device starts to fuse the target cloth model of the rendered frame and the reconstruction result of the first cloth model of the current frame, or may be a time point at which the terminal device completes fusing the target cloth model of the rendered frame and the reconstruction result of the first cloth model of the current frame. (A time difference between the two cases is very small, and may be ignored in some scenarios. Therefore, the fifth time point may alternatively be any time point between time points corresponding to the two cases.)

Refer to FIG. 3B again. The fourth time point may be a time point of the (i-1)^{th} frame. The fifth time point may be a time point of the i^{th} frame.

It should be noted that FIG. 3B shows a time sequence relationship between the fourth time point and the fifth time point, and does not represent an actual interval between the fourth time point and the fifth time point. Similarly, FIG. 3B shows a time sequence relationship between five time points: the first time point to the fifth time point, and does not represent actual intervals between the five time points: the first time point to the fifth time point.

For example, the fourth weight is a difference between 1 and the third weight.

For example, the fused result may be determined according to the following formula (6): ${V}_{i}^{n} = {f}_{mix} \left({{V}_{d}}^{n}, {V}^{n - 1}, {e}^{- \frac{\left|T4-T5\right|}{{t}_{c}}}\right)$ (6)

T4 is the fourth time point, T5 is the fifth time point, ${V}_{i}^{n}$ is a position of an i^{th} vertex in a target cloth model of the current frame, *V*^{*n*-1} is the target cloth model of the previous frame, and *V_{d}ⁿ* is the first cloth model of the current frame.

For another example, the fused result may be determined according to the following formula (7): ${V}_{i}^{n} = {f}_{mix} \left({V}_{d}^{n},{V}^{n - 1},{f}_{clamp}\left(\frac{k \left|T4-T5\right|}{{t}_{c}}, 0, 1\right)\right)$ (7)

In Formula (7), k is a preset constant, and a value range may be any positive number. Alternatively, k may be set to an infinitely large number, which means that no interpolation is performed.

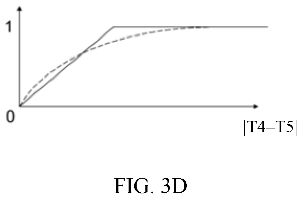

FIG. 3D illustrates an interpolation function.

A dashed line in FIG. 3D is a diagram of an interpolation function ${e}^{- \frac{\left|T4-T5\right|}{{t}_{c}}}$ in Formula (6), and a solid line in FIG. 3D is a diagram of an interpolation function ${f}_{clamp} \left(\frac{k \left|T4-T5\right|}{{t}_{c}}, 0, 1\right)$ in Formula (7). It can be learned from FIG. 3D that, function values of the interpolation functions in Formula (6) and Formula (7) are limited to an interval from 0 to 1. A design idea is that, at a time point that is close to a time point at which the latest delivered data (namely, the first cloth model of the current frame) is received, an interpolation result is close to the target cloth model of the rendered frame, and otherwise, the interpolation result is close to the first cloth model of the current frame.

A difference between Formula (6) and Formula (7) is that the interpolation function ${e}^{- \frac{\left|T4-T5\right|}{{t}_{c}}}$ in Formula (6) is an exponential function, and the interpolation function ${f}_{clamp} \left(\frac{k \left|T4-T5\right|}{{t}_{c}}, 0, 1\right)$ in Formula (7) is a linear function.

S310: The terminal device fuses the second cloth model of the current frame and the fused result to obtain the target cloth model of the current frame.

For example, the terminal device may perform weighted calculation on the second cloth model of the current frame and the fused result to obtain the target cloth model of the current frame. Specifically, the terminal device may perform weighted calculation on the second cloth model of the current frame and the fused result based on a fifth weight and a sixth weight to obtain the target cloth model of the current frame.

For example, the fifth weight corresponds to the second cloth model of the current frame, and the sixth weight corresponds to the fused result; and the fifth weight is directly proportional to a difference between the second time point and a sixth time point, and the sixth weight is inversely proportional to the difference between the second time point and the sixth time point. The sixth time point may be a time point at which the terminal device sends the physical simulation data. In this way, a local low-configuration result of the device-side device and a high-configuration result delivered by the cloud side can be mixed. If a clock cycle between two frames in which the device-side device sends data and receives data is too long, reliability of a result delivered by the cloud side is not high. In this case, a final result is less affected by cloth simulation on the cloud side.

For example, the sixth time point may be the same as or different from the first time point. This is not limited in this application.

It should be noted that the sixth time point may be a time point at which the terminal device starts to send the physical simulation data, or may be a predicted time point at which the terminal device completes sending the physical simulation data. (A time difference between the two cases is very small, and may be ignored in some scenarios. Therefore, the sixth time point may alternatively be any time point between time points corresponding to the two cases.) This is not limited in this application.

For example, the sixth weight is a difference between 1 and the fifth weight.

For example, the target cloth model *Vⁿ* of the current frame may be determined according to the following formula (8): ${V}^{n} = {f}_{mix} \left({{V}_{i}}^{n}, {{V}_{s}}^{n}, {e}^{- \frac{\left|T2-T6\right|}{2.5 {t}_{c}}}\right)$ (8)

T6 is the sixth time point, T2 is the second time point, and *Vₛⁿ* is the second cloth model of the current frame.

For another example, the target cloth model *V ⁿ* of the current frame may be determined according to the following formula (9): ${V}_{i}^{n} = {f}_{mix} \left({V}_{i}^{n},{V}_{s}^{n},{f}_{clamp}\left(\frac{k \left|T2-T6\right|}{{t}_{c}}, 0, 1\right)\right)$ (9)

In an extreme case of severe frame freezing or frame loss, the target cloth model of the current frame determined according to Formula (6) and Formula (8) is more accurate than the target cloth model of the current frame determined according to Formula (7) and Formula (9). In a case of slight frame freezing or frame loss, the target cloth model of the current frame determined according to Formula (6) and Formula (8) is equivalent to the target cloth model of the current frame determined according to Formula (7) and Formula (9).

S311: The terminal device renders a three-dimensional scene based on the target cloth model of the current frame and the target play position of the character to obtain a rendered image of the current frame.

For example, the terminal device may determine a target skeleton status of the character based on the target play position of the character and the animation sequence of the character. Then, a skeleton status of a character model in the three-dimensional scene is adjusted based on the target skeleton status of the character. Then, the character model whose skeleton status is adjusted in the three-dimensional scene and the target cloth model of the current frame are rendered to obtain the rendered image of the current frame.

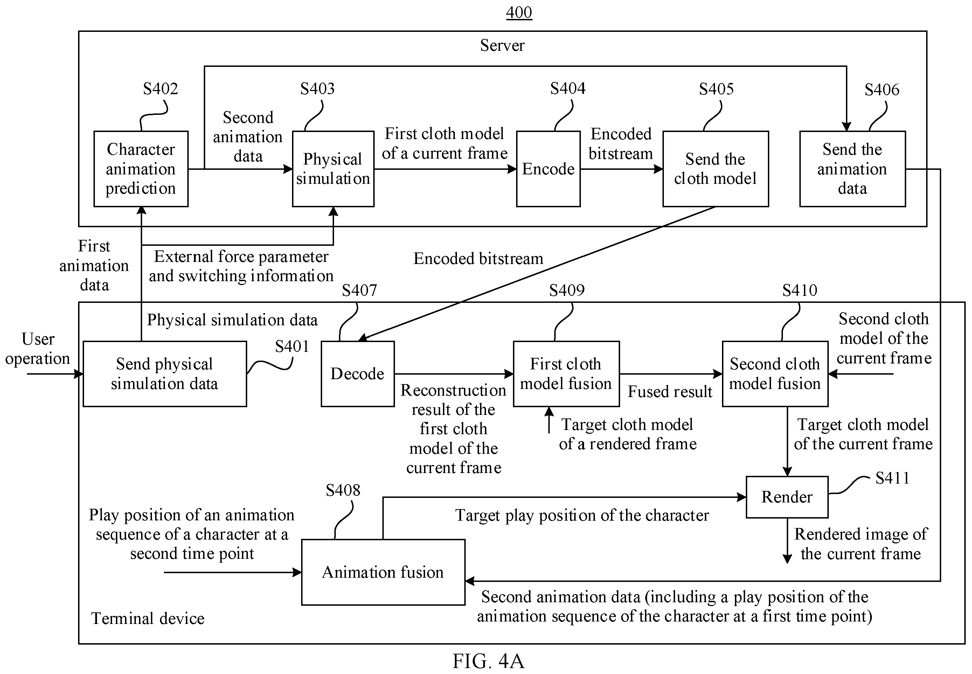

FIG. 4A illustrates a device-cloud collaborative rendering process 400. Compared with the rendering process 300, in the rendering process 400, a user operation received by a terminal device further includes switching a physical simulation object.

S401: The terminal device sends physical simulation data to a server, where the physical simulation data includes an external force parameter, first animation data, and switching information.

For example, the switching information includes at least one of the following: an identifier of the physical simulation object, a model of the physical simulation object, or an encoded model of the physical simulation object, where the identifier of the physical simulation object indicates the model of the physical simulation object.

For example, when there is a model of a physical simulation object after switch in the server, the switching information may include only the identifier of the physical simulation object. When the model of the physical simulation object after switch is newly generated by the terminal device, the switching information may include the identifier of the physical simulation object and the model of the physical simulation object (or the encoded model of the physical simulation object).

S402: The server predicts second animation data based on the first animation data in the physical simulation data.

For example, for S402, refer to the description of S302. Details are not described herein again.

S403: The server performs physical simulation on the physical simulation object based on the second animation data, the external force parameter, and the switching information to obtain a first cloth model of a current frame.

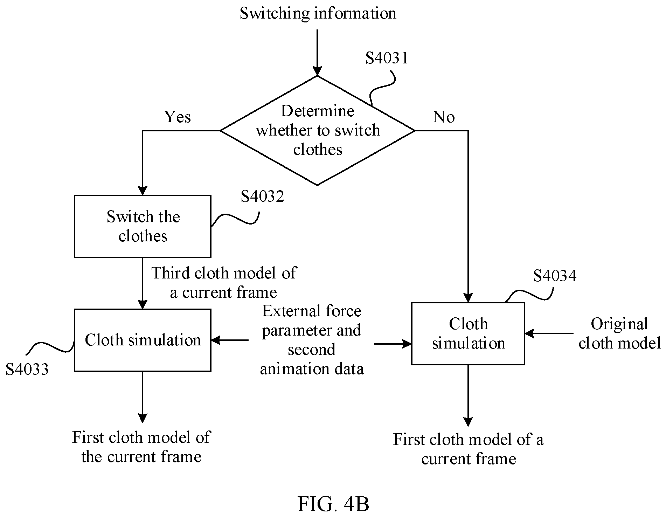

FIG. 4B illustrates a physical simulation process.

For example, S403 may include the following S4031 to S4033:

S4031: Determine, based on the switching information, whether a cloth model needs to be switched.

For example, the server may determine whether a physical simulation object identifier in switching information received this time is the same as a physical simulation object identifier in switching information received last time. When the physical simulation object identifier in the switching information received this time is different from the physical simulation object identifier in the switching information received last time, it may be determined that the cloth model needs to be switched, and S4032 is performed. When the physical simulation object identifier in the switching information received this time is the same as the physical simulation object identifier in the switching information received last time, it may be determined that the animation sequence does not need to be switched, and S4024 is performed.

S4032: The server switches an original cloth model to a third cloth model of the current frame, where the third cloth model is determined based on the switching information received this time.

For example, the original cloth model is determined based on the switching information received last time. For example, the original cloth model may be determined based on the identifier of the physical simulation object in the switching information received last time. For another example, a cloth model in the switching information received last time may be used as the original cloth model. For another example, the encoded cloth model of the physical simulation object in the switching information received last time is decoded to obtain the original cloth model.

For example, the original cloth model is stored in a cache of a rendering pipeline, and the server may switch the original cloth model stored in the cache of the rendering pipeline to the third cloth model. For example, the third cloth model may be determined based on the identifier of the physical simulation object in the switching information received this time. For another example, the cloth model in the switching information received this time may be used as the third cloth model. For another example, the encoded cloth model of the physical simulation object in the switching information received this time is decoded to obtain the third cloth model.

S4033: Perform cloth simulation on cloth based on the external force parameter, the second animation data, and the third cloth model of the current frame to obtain the first cloth model of the current frame.

For example, the external force parameter, the second animation data, and the third cloth model of the current frame may be input into a physical simulation engine to obtain the first cloth model of the current frame.

S4034: Perform cloth simulation on cloth based on the external force parameter, the second animation data, and the original cloth model to obtain the first cloth model of the current frame.

For example, the external force parameter, the second animation data, and the original cloth model are input into a physical simulation engine to obtain the first cloth model of the current frame.

S404: The server encodes the first cloth model of the current frame to obtain an encoded bitstream.

S405: The server sends the encoded bitstream.

S406: The server sends the second animation data.

S407: The terminal device decodes the encoded bitstream to obtain a reconstruction result of the first cloth model of the current frame.

S408: The terminal device fuses a play position of an animation sequence of a character at a second time point and a play position of the animation sequence of the character at a first time point to obtain a target play position of the character.

For example, if the reconstruction result of the first cloth model of the current frame obtained through decoding in S407 corresponds to a physical simulation identifier in switching information uploaded by the terminal device this time, S409 and S410 may be performed. If the reconstruction result of the first cloth model of the current frame obtained through decoding in S407 does not correspond to a physical simulation identifier in switching information uploaded by the terminal device this time, it indicates that the server does not perform physical simulation based on the third cloth model. Therefore, to respond to a user operation in time and ensure that a finally displayed image includes cloth after switch, a second cloth model of the current frame may be used as a target cloth model of the current frame.

It should be understood that, when the user operation includes switching the physical simulation object, the terminal device may also perform S4032 and S4033 to obtain the second cloth model of the current frame. It should be noted that physical simulation in S4032 and S4033 performed by the terminal device is "simple physical simulation".

S409: The terminal device fuses a target cloth model of a rendered frame and the reconstruction result of the first cloth model of the current frame to obtain a fused result.

S410: The terminal device fuses the second cloth model of the current frame and the fused result to obtain the target cloth model of the current frame.

S411: The terminal device renders a three-dimensional scene based on the target cloth model of the current frame and the target play position of the character to obtain a rendered image of the current frame.

For example, for S408 to S411, refer to the descriptions of S308 to S311. Details are not described herein again.

It should be understood that the switching information is an optional item in the physical simulation data.

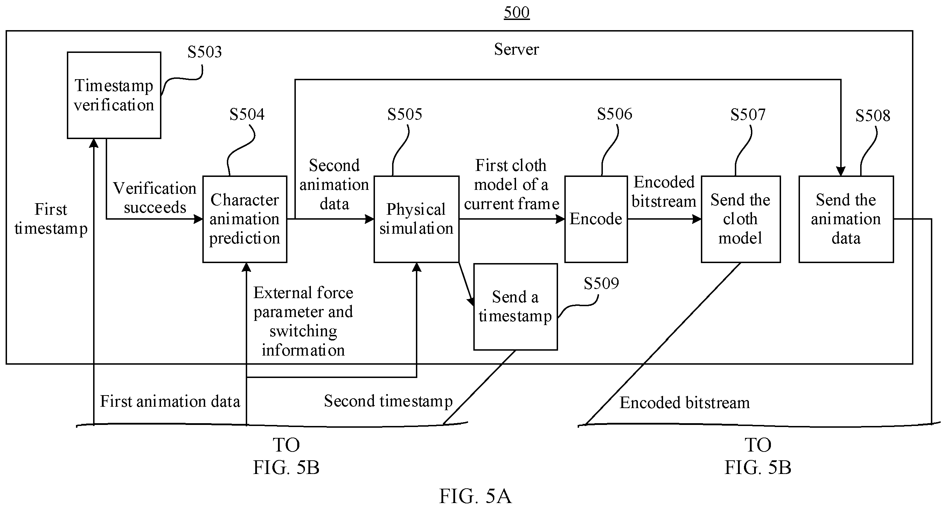

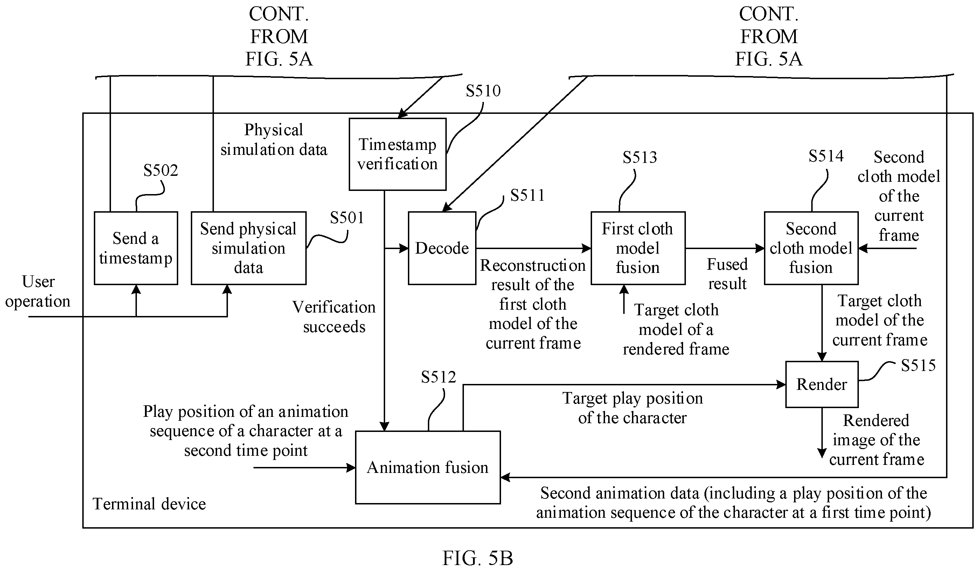

FIG. 5A and FIG. 5B illustrate a device-cloud collaborative rendering process 500. The rendering process 500 is shown based on the rendering process 400. In the rendering process 500, a terminal device and a server may transmit timestamps to each other, to ensure timeliness of to-be-exchanged data transmitted between the terminal device and the server.

S501: The terminal device sends physical simulation data to the server, where the physical simulation data includes an external force parameter, first animation data, and switching information.

S502: The terminal device sends a first timestamp to the server.

For example, when receiving a user operation, the terminal device may further send the first timestamp to the server. An execution sequence of S501 and S502 is not displayed in this application.

S503: The server verifies the first timestamp.

For example, the server may calculate a difference between a current time and the first timestamp. When the difference between the current time and the first timestamp is greater than a first verification threshold, it may be determined that the verification on the first timestamp fails, and the procedure may be ended, that is, character animation prediction (namely, S504) and physical simulation, and subsequent other steps are not performed. When the difference between the current time and the first timestamp is less than or equal to the first verification threshold, it may be determined that the verification on the first timestamp succeeds, and S504 may be performed. The first verification threshold may be set as required. This is not limited in this application.

S504: The server predicts second animation data based on the first animation data in the physical simulation data when the verification on the first timestamp succeeds.

S505: The server performs physical simulation on a physical simulation object based on the second animation data, the external force parameter, and the switching information to obtain a first cloth model of a current frame.

For example, for S504 and S505, refer to the descriptions of S402 and S403. Details are not described herein again.

S506: The server encodes the first cloth model of the current frame to obtain an encoded bitstream.

S507: The server sends the encoded bitstream.

S508: The server sends the second animation data.

S509: The server sends a second timestamp.

For example, an execution sequence of S507, S508, and S509 is not limited in this application.

S510: The terminal verifies the second timestamp.

For example, the terminal device may calculate a difference between a current time and the second timestamp. When the difference between the current time and the second timestamp is greater than a second verification threshold, it may be determined that the verification on the second timestamp fails, and a second cloth model of the current frame may be used as a target cloth model of the current frame; a play position corresponding to an animation sequence of a character at a second moment is used as a target play position of the character; and then S515 is performed. When the difference between the current time and the second timestamp is less than or equal to the second verification threshold, it may be determined that the verification on the second timestamp succeeds, and S511 to S515 may be performed. The second verification threshold may be set as required. This is not limited in this application.

S511: The terminal device decodes the encoded bitstream to obtain a reconstruction result of the first cloth model of the current frame.

S512: When the verification on the second timestamp succeeds, the terminal device fuses a play position of the animation sequence of the character at a second time point and a play position of the animation sequence of the character at a first time point to obtain the target play position of the character.

S513: When the verification on the second timestamp succeeds, the terminal device fuses a target cloth model of a rendered frame and the reconstruction result of the first cloth model of the current frame to obtain a fused result.

S514: The terminal device fuses the second cloth model of the current frame and the fused result to obtain the target cloth model of the current frame.

S515: The terminal device renders a three-dimensional scene based on the target cloth model of the current frame and the target play position of the character to obtain a rendered image of the current frame.

For example, for S512 to S515, refer to the descriptions of S408 to S411. Details are not described herein again.

It should be understood that, based on the rendering process 300, the terminal device and the server may also transmit timestamps to each other, to ensure timeliness of to-be-exchanged data transmitted between the terminal device and the server. This is not limited in this application.

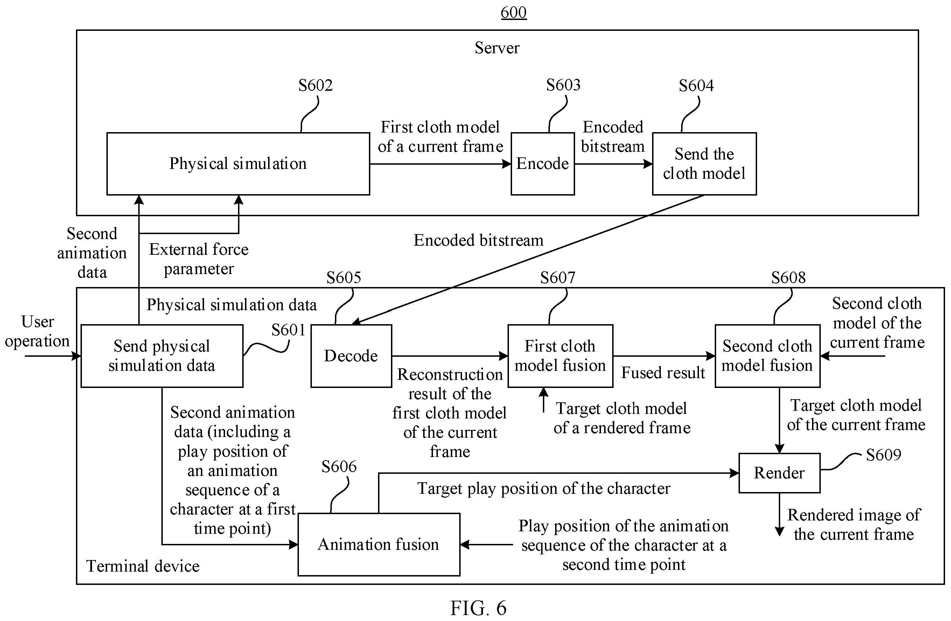

FIG. 6 illustrates a device-cloud collaborative rendering process 600. A difference between the rendering process 600 and the rendering process 300 is that, in the rendering process 600, physical simulation data includes an external force parameter and second animation data, and the server does not need to deliver the second animation data.

S601: A terminal device sends the physical simulation data to the server, where the physical simulation data may include the external force parameter and the second animation data.

For example, when receiving a user operation, the terminal device may further generate the second animation data. For a specific process, refer to the description in S302. Details are not described herein again.

S602: The server performs physical simulation on a physical simulation object based on the external force parameter and the second animation data to obtain a first cloth model of a current frame.

S603: The server encodes the first cloth model of the current frame to obtain an encoded bitstream.

S604: The server sends the encoded bitstream.

S605: The terminal device decodes the encoded bitstream to obtain a reconstruction result of the first cloth model of the current frame.

S606: The terminal device fuses a play position of an animation sequence of a character at a second time point and a play position of the animation sequence of the character at a first time point to obtain a target play position of the character.

S607: The terminal device fuses a target cloth model of a rendered frame and the reconstruction result of the first cloth model of the current frame to obtain a fused result.

S608: The terminal device fuses a second cloth model of the current frame and the fused result to obtain a target cloth model of the current frame.

S609: The terminal device renders a three-dimensional scene based on the target cloth model of the current frame and the target play position of the character to obtain a rendered image of the current frame.

It should be understood that, in the rendering process 400 and the rendering process 500, the physical simulation data may also include the external force parameter and the second animation data, and the server does not need to deliver the second animation data. Details are not described herein again.

The following collects statistics on quantities of subjective delay evaluations of different users in different delays, which may be shown in Table 1 below.

**Table 1**

| Delay (ms) | <60 | 60-70 | 70-80 | 80-90 | 90-100 | 100-110 | 110-120 | 120-130 | >130 |
|---|---|---|---|---|---|---|---|---|---|
| No frame freezing | 5 | 4 | 2 | 9 | 6 | 6 | 5 | 1 | 0 |
| Obvious frame freezing | 0 | 0 | 0 | 0 | 3 | 5 | 10 | 4 | 5 |
| Severe frame freezing | 0 | 0 | 0 | 0 | 0 | 1 | 2 | 3 | 10 |

According to Table 1, when the delay is less than 60 ms, five users do not feel frame freezing, and no user feels obvious frame freezing or severe frame freezing. When the delay is 60 ms to 70 ms, four users do not feel frame freezing, and no user feels obvious frame freezing or severe frame freezing. The rest may be deduced by analogy. Details are not described herein again.

In this application, a cloth model with a quantity of vertices of 10,000 is used as an example. When a frame rate on a device side is 30 FPS, a data delivery bit rate in this solution is 0.98 Mbps. When a network delay (upload and delivery delay) is ignored, an average of delays is 55 ms. It can be learned from experimental results that the present invention can significantly reduce the bit rate, and the delay is acceptable to users. In addition, even if current network uplink and downlink delays are considered, the delay is still acceptable to users.

In addition, in the conventional technology, in a solution in which a server renders and then compresses an image or video and sends the image or video to a terminal device, a downlink bandwidth is generally 10 Mbps to 20 Mbps. However, for common cloth models in mobile games, in this application, a downlink bandwidth can be reduced to 0.5 Mbps to 5 Mbps on the premise that the terminal device obtains lossless videos.

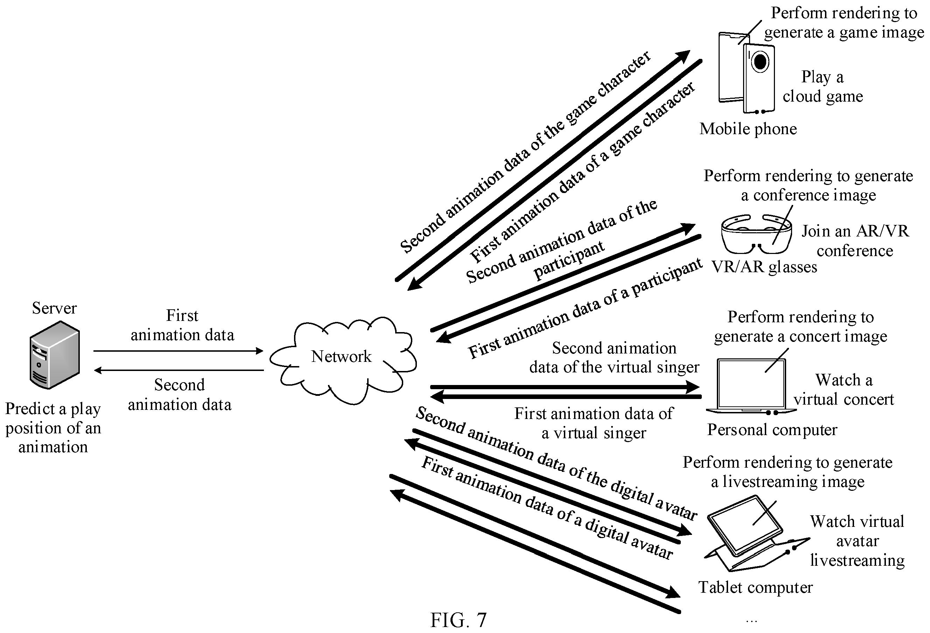

FIG. 7 illustrates a device-cloud collaborative application scenario. A network in FIG. 7 includes but is not limited to a wired network and a wireless network (for example, a cellular network and a Wi-Fi (Wireless Fidelity, wireless fidelity) network). This is not limited in this application.

Refer to FIG. 7. For example, after receiving a user operation, a terminal device (which may also be referred to as a device or a device-side device) may send first animation data to a server (which may also be referred to as a cloud or a cloud server) over the network. Then, the server may predict an animation play position based on the first animation data to obtain second animation data. Then, the server may send the second animation data to the terminal device over the network. Then, the terminal device may perform rendering based on the second animation data to obtain a rendered image and display the image.

For example, in a scenario in which a mobile phone is used to play a cloud game in FIG. 7, the mobile phone may send first animation data of a game character to the server over the network, and the server may send second animation data of the game character to the mobile phone over the network. In this way, the mobile phone may perform rendering based on the second animation data of the game character to obtain a game view (namely, a rendered game view) and display the game view.

For example, in a scenario in which AR/VR glasses are used to join an AR/VR conference in FIG. 7, the AR/VR glasses may send first animation data of a participant to the server over the network, and the server may send second animation data of the participant to the AR/VR glasses over the network. In this way, the AR/VR glasses may perform rendering based on the second animation data of the participant to obtain an AR/VR conference view (namely, a rendered AR/VR conference view) and display the conference view.

For example, in a scenario in which a personal computer is used to watch a virtual concert in FIG. 7, the personal computer may send first animation data of a virtual singer to the server over the network, and the server may send second animation data of the virtual singer to the personal computer over the network. In this way, the personal computer may perform rendering based on the second animation data of the virtual singer to obtain a concert view (namely, a rendered concert view) and display the concert view.

For example, in a scenario in which a tablet computer is used to watch cloud digital avatar livestreaming in FIG. 7, the tablet computer may send first animation data of a digital avatar to the server over the network, and the server may send second animation data of the digital avatar to the tablet computer over the network. In this way, the tablet computer may perform rendering based on the second animation data of the digital avatar to obtain a digital avatar livestreaming view (namely, a rendered livestreaming view) and display the livestreaming view.

It should be understood that this application may be further applied to another scenario. This is not limited in this application.

The following describes a device-cloud collaborative rendering process by using a cloud gaming scenario as an example.

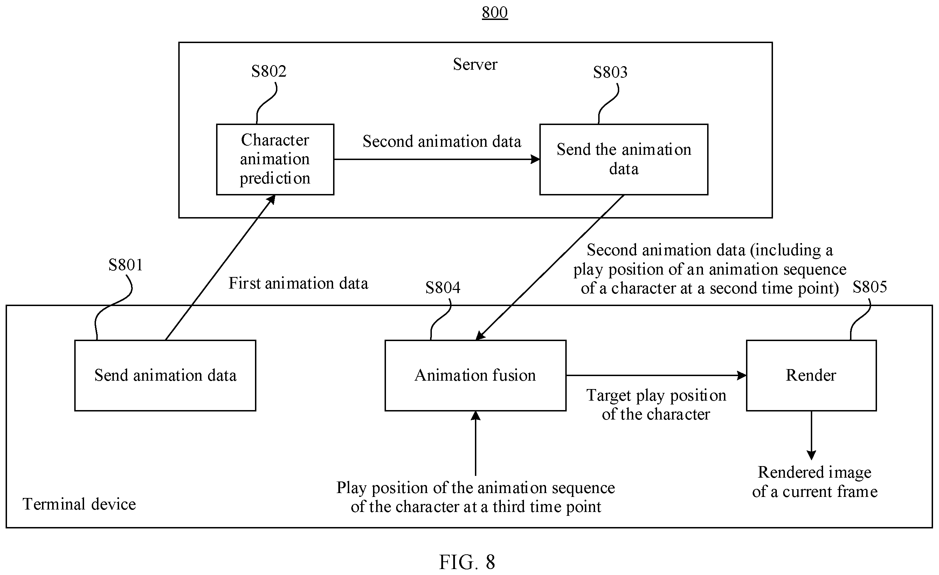

FIG. 8 illustrates a device-cloud collaborative rendering process.

S801: A terminal device sends first animation data to a server, where the first animation data is used to describe an animation status of a character at a first time point, and the first time point may be a time point at which the terminal device sends the first animation data to the server.

For example, the first animation data includes at least one of the following:
an animation sequence identifier of the character;
an animation sequence of the character;
an encoded animation sequence of the character; and
a play position of the animation sequence of the character at the first time point, and a position and an orientation of the character at the first time point.

S802: The server predicts second animation data based on the first animation data, where the second animation data is used to describe an animation status of the character at a second time point, and the second time point may be a predicted time point at which the terminal device receives the second animation data.

For example, the second animation data includes a play position of the animation sequence of the character at the second time point, and a skeleton status, a position, and an orientation of the character at the second time point.

S803: The server sends the second animation data to the terminal device.

S804: The terminal device fuses the play position of the animation sequence of the character at the second time point and a play position of the animation sequence of the character at a third time point to obtain a target play position of the character, where the third time point is a time point at which the terminal device actually receives the second animation data.

For example, S804 may include: performing weighted calculation on the play position of the animation sequence of the character at the second time point and the play position of the animation sequence of the character at the third time point based on a first weight and a second weight to obtain the target play position of the character.

For example, the first weight corresponds to the play position of the animation sequence of the character at the second time point, and the second weight corresponds to the play position of the animation sequence of the character at the third time point; and the first weight is inversely proportional to a difference between the second time point and the third time point, and the second weight is directly proportional to the difference between the second time point and the third time point.

For example, the second weight may be a difference between 1 and the first weight.

For example, for S801 to S804, refer to the foregoing descriptions. Details are not described herein again.

S805: The terminal device renders a three-dimensional scene based on the target play position of the character to obtain a rendered image.

For example, the terminal device may determine a target skeleton status of the character based on the target play position of the character and the animation sequence of the character, then adjusts a skeleton status of a character model in the three-dimensional scene based on the target skeleton status of the character, and then renders the character model in the three-dimensional scene whose skeleton status is adjusted, to obtain the rendered image of a current frame.

In this way, the play position of the animation sequence of the character at the second time point and the play position of the animation sequence of the character at the third time point are fused, and a jump or instantaneous movement of an action of the character on a device side can be prevented, so that action of the character in two adjacent frames is more natural and smoother.

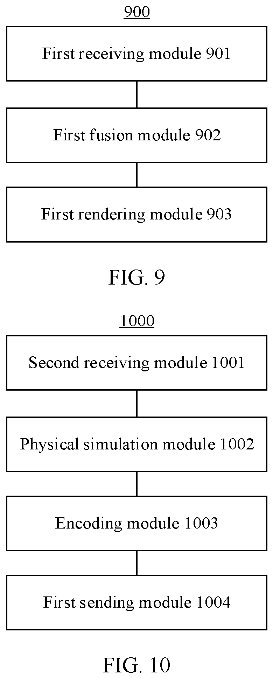

FIG. 9 illustrates a rendering apparatus 900. The rendering apparatus 900 may be configured to perform the methods in the foregoing embodiments. Therefore, for beneficial effect that can be achieved by the rendering apparatus 900, refer to the beneficial effect in the corresponding methods provided above. Details are not described herein again.

A first receiving module 901 is configured to receive a first candidate simulation result of a current frame;
a first fusion module 902 is configured to fuse a second candidate simulation result of the current frame and the first candidate simulation result of the current frame to obtain a target simulation result of the current frame; and
a first rendering module 903 is configured to render a three-dimensional scene based on the target simulation result of the current frame to obtain a rendered image of the current frame, where
the first candidate simulation result of the current frame is a simulation result corresponding to a first time point, and the first time point is a predicted time point at which a terminal device receives the first candidate simulation result of the current frame; and the second candidate simulation result of the current frame is a simulation result corresponding to a second time point, and the second time point is a time point at which the terminal device actually receives the first candidate simulation result of the current frame.

For example, the first fusion module 902 is further configured to fuse a target simulation result of a rendered frame and the first candidate simulation result of the current frame to obtain a fused result; and
the first fusion module 902 is specifically configured to fuse the second candidate simulation result of the current frame and the fused result to obtain the target simulation result of the current frame.

For example, the rendering apparatus 900 further includes:
a third sending module, configured to send physical simulation data, where the physical simulation data includes first animation data, the first animation data is used to describe an animation status of a character at a third time point, and the third time point is a time point at which the terminal device sends the first animation data; the first candidate simulation result of the current frame is obtained by performing physical simulation on a physical simulation object based on second animation data, the second animation data is obtained through prediction based on the first animation data, and the second animation data is used to describe an animation status of the character at the first time point; and the three-dimensional scene includes the physical simulation object and the character, and the character is bound to the physical simulation object.

For example, the first animation data includes at least one of the following:
an animation sequence identifier of the character;
an animation sequence of the character;
an encoded animation sequence of the character; and
a play position of the animation sequence of the character at the third time point, and a position and an orientation of the character at the third time point.

For example, the third sending module is configured to send physical simulation data, where the physical simulation data includes second animation data, the second animation data is used to describe an animation status of a character at the first time point; the first candidate simulation result of the current frame is obtained by performing physical simulation on a physical simulation object based on the second animation data; and the three-dimensional scene includes the physical simulation object and the character, and the character is bound to the physical simulation object.

For example, the second animation data includes a play position of the animation sequence of the character at the first time point, and a skeleton status, a position, and an orientation of the character at the first time point.

For example, the rendering apparatus 900 further includes:
a third fusion module, configured to fuse a play position of the animation sequence of the character at the second time point and the play position of the animation sequence of the character at the first time point to obtain a target play position of the character; and
the first rendering module 903 is specifically configured to render the three-dimensional scene based on the target simulation result of the current frame and the target play position of the character to obtain the rendered image of the current frame.

For example, the third fusion module is specifically configured to perform weighted calculation on the play position of the animation sequence of the character at the first time point and the play position of the animation sequence of the character at the second time point based on a first weight and a second weight to obtain the target play position of the character.

For example, the first weight corresponds to the play position of the animation sequence of the character at the first time point, and the second weight corresponds to the play position of the animation sequence of the character at the second time point; and the first weight is inversely proportional to a difference between the first time point and the second time point, and the second weight is directly proportional to the difference between the first time point and the second time point.

For example, the first fusion module 902 is specifically configured to perform weighted calculation on the target simulation result of the rendered frame and the first candidate simulation result of the current frame based on a third weight and a fourth weight to obtain the fused result.

For example, the third weight corresponds to the target simulation result of the rendered frame, and the fourth weight corresponds to the first candidate simulation result of the current frame; the third weight is inversely proportional to a difference between a fourth time point and a fifth time point, and the fourth weight is directly proportional to the difference between the fourth time point and the fifth time point; and the fourth time point is a time point at which the terminal device actually receives a first candidate simulation result of the rendered frame, and the fifth time point is a time point at which the terminal device fuses the second candidate simulation result of the current frame and the first candidate simulation result of the current frame.

For example, the first fusion module 902 is specifically configured to perform weighted calculation on the second candidate simulation result of the current frame and the fused result based on a fifth weight and a sixth weight to obtain the target simulation result of the current frame.

For example, the fifth weight corresponds to the second candidate simulation result of the current frame, and the sixth weight corresponds to the fused result; the fifth weight is directly proportional to a difference between the second time point and a sixth time point, and the sixth weight is inversely proportional to the difference between the second time point and the sixth time point; and the sixth time point is a time point at which the terminal device sends the physical simulation data.

For example, the first candidate simulation result of the current frame includes a first cloth model of the current frame, the second candidate simulation result of the current frame includes a second cloth model of the current frame, and the target simulation result of the current frame includes a target cloth model of the current frame;
the first receiving module 901 is specifically configured to receive an encoded bitstream, where the encoded bitstream includes an encoded first cloth model of the current frame;
the rendering apparatus 900 further includes a decoding module, where the decoding module is configured to decode the encoded bitstream to obtain a reconstruction result of the first cloth model of the current frame; and
the first fusion module 902 is specifically configured to fuse the second cloth model of the current frame and the reconstruction result of the first cloth model of the current frame to obtain the target cloth model of the current frame.

For example, the physical simulation data further includes switching information, where the switching information includes at least one of the following: an identifier of the physical simulation object, a model of the physical simulation object, or an encoded model of the physical simulation object, where the identifier of the physical simulation object indicates the model of the physical simulation object.

For example, the third sending module is further configured to send a first timestamp, where the first candidate simulation result of the current frame is obtained by performing physical simulation on the physical simulation object based on the physical simulation data after verification on the first timestamp succeeds.

For example, the first receiving module 901 is further configured to receive a second timestamp.

For example, the first fusion module 902 is specifically configured to: when verification on the second timestamp succeeds, perform the step of fusing the second candidate simulation result of the current frame and the first candidate simulation result of the current frame to obtain the target simulation result of the current frame.

For example, the first candidate simulation result of the current frame includes at least one of the following: a position and an orientation of a rigid body, or a cloth model.

FIG. 10 illustrates a physical simulation apparatus 1000. The physical simulation apparatus 1000 may be configured to perform the methods in the foregoing embodiments. Therefore, for beneficial effect that can be achieved by the physical simulation apparatus 1000, refer to the beneficial effect in the corresponding methods provided above. Details are not described herein again.

A second receiving module 1001 is configured to receive physical simulation data;
a physical simulation module 1002 is configured to perform physical simulation on a physical simulation object based on the physical simulation data to obtain a first candidate simulation result of a current frame;
an encoding module 1003 is configured to encode the first candidate simulation result of the current frame to obtain an encoded bitstream; and
a first sending module 1004 is configured to send the encoded bitstream.

For example, the first candidate simulation result of the current frame includes a first cloth model of the current frame.

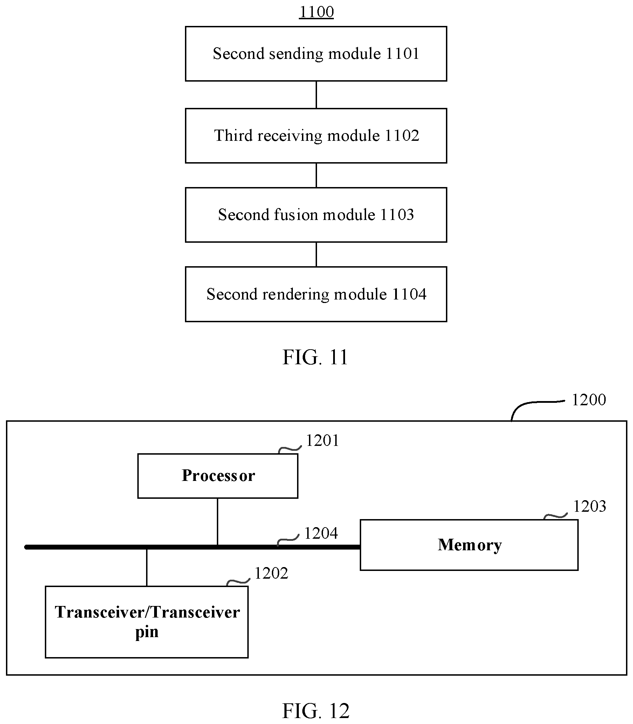

FIG. 11 illustrates a rendering apparatus 1100. The rendering apparatus 1100 may be configured to perform the methods in the foregoing embodiments. Therefore, for beneficial effect that can be achieved by the rendering apparatus 1100, refer to the beneficial effect in the corresponding methods provided above. Details are not described herein again.

A second sending module 1101 is configured to send first animation data by the sending module, where the first animation data is used to describe an animation status of a character at a first time point, and the first time point is a time point at which a terminal device sends the first animation data to a server;
a third receiving module 1102 is configured to receive second animation data, where the second animation data is used to describe an animation status of the character at a second time point, and the second time point is a predicted time point at which the terminal device receives the second animation data;
a second fusion module 1103 is configured to fuse a play position of an animation sequence of the character at the second time point and a play position of the animation sequence of the character at a third time point to obtain a target play position of the character, where the third time point is a time point at which the terminal device actually receives the second animation data; and
a second rendering module 1104 is configured to render a three-dimensional scene based on the target play position of the character to obtain a rendered image, where the three-dimensional scene includes the character.

For example, the second fusion module 1103 is specifically configured to perform weighted calculation on the play position of the animation sequence of the character at the second time point and the play position of the animation sequence of the character at the third time point based on a first weight and a second weight to obtain the target play position of the character.

For example, the first weight corresponds to the play position of the animation sequence of the character at the second time point, and the second weight corresponds to the play position of the animation sequence of the character at the third time point; and the first weight is inversely proportional to a difference between the second time point and the third time point, and the second weight is directly proportional to the difference between the second time point and the third time point.

For example, the first animation data includes at least one of the following:
an animation sequence identifier of the character;
the animation sequence of the character;
an encoded animation sequence of the character; and
a play position of the animation sequence of the character at the first time point, and a position and an orientation of the character at the first time point.

For example, the second animation data includes the play position of the animation sequence of the character at the second time point, and a skeleton status, a position, and an orientation of the character at the second time point.

In an example, FIG. 12 is a block diagram of an apparatus 1200 according to an embodiment of this application. The apparatus 1200 may include a processor 1201 and a transceiver/transceiver pin 1202. Optionally, the apparatus 1200 further includes a memory 1203.

Components of the apparatus 1200 are coupled together through a bus 1204. In addition to a data bus, the bus 1204 further includes a power bus, a control bus, and a status signal bus. However, for clear description, various types of buses in the figure are referred to as the bus 1204.

Optionally, the memory 1203 may be configured to store instructions in the foregoing method embodiments. The processor 1201 may be configured to: execute the instructions in the memory 1203, control a receive pin to receive a signal, and control a transmit pin to send a signal.

The apparatus 1200 may be the electronic device or a chip of the electronic device in the foregoing method embodiments.

The electronic device may be a server or a terminal device.

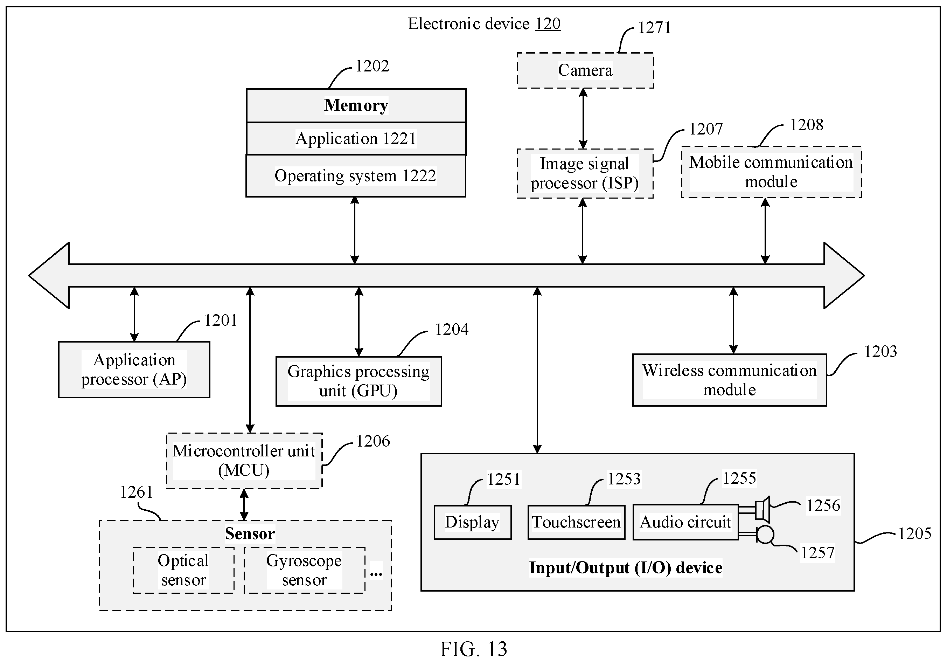

FIG. 13 is a diagram of an example of a structure of an electronic device 120. The electronic device 120 may be a terminal device.

As shown in FIG. 13, the electronic device 120 includes components such as an application processor 1201, a memory 1202, a wireless communication module 1203, a graphics processing unit (graphics processing unit, GPU) 1204, and an input/output (input/output, I/O) device 1205. A person skilled in the art may understand that the hardware structure shown in FIG. 13 does not constitute a limitation on the electronic device 120, and the electronic device 120 may include more or fewer components than those shown in the figure, or combine a part of the components, or have different layouts of the components.

The following describes components of the electronic device 120 in detail with reference to FIG. 13.

The application processor 1201 is a control center of the electronic device 120, and is connected to the components of the electronic device 120 through various interfaces and buses. In some embodiments, the application processor 1201 may include one or more processing modules.

The memory 1202 stores a computer program, for example, an operating system 1222 and an application 1221 shown in FIG. 13. The application processor 1201 is configured to execute the computer program in the memory 1202, to implement a function defined by the computer program. For example, the application processor 1201 executes the operating system 1222, to implement various functions of the operating system on the electronic device 120. The memory 1202 further stores other data in addition to the computer program, for example, data generated during running of the operating system 1222 and the application 1221. The memory 1202 is a nonvolatile storage medium, and generally includes an internal memory and an external memory. The internal memory includes, but is not limited to, a random access memory (random access memory, RAM), a read-only memory (read-only memory, ROM), a cache (cache) or the like. The external memory includes, but is not limited to, a flash memory (flash memory), a hard disk, an optic disc, a universal serial bus (universal serial bus, USB) flash drive, or the like. The computer program is generally stored in the external memory. Before executing the computer program, the processor loads the program from the external memory to the internal memory.

The memory 1202 may be independent, and is connected to the application processor 1201 through a bus. Alternatively, the memory 1202 and the application processor 1201 may be integrated into a chip subsystem.

The wireless communication module 1203 may provide a solution, applied to the electronic device 120, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 1203 may be one or more components integrating at least one communication processing module. The wireless communication module 1203 receives an electromagnetic wave through an antenna, performs demodulation and filtering processing on an electromagnetic wave signal, and sends a processed signal to the application processor 1201. The wireless communication module 1203 may further receive a to-be-sent signal from the application processor 1201, perform frequency modulation and amplification on the signal, and convert a processed signal into an electromagnetic wave for radiation through the antenna.

The GPU 1204 performs drawing and rendering calculation on image data, to generate a to-be-displayed image. The GPU is also referred to as a display core or a visual processor, is a microprocessor that performs image operation, and may include a 2D (dimension, Dimension) processing function and/or a 3D processing function. The electronic device 120 may include one or more GPUs that execute program instructions to generate or change display information. For example, the GPU may be configured to perform operations such as physical simulation, rendering, and predicting second animation data based on the first animation data.

The input/output device 1205 includes but is not limited to a display 1251, a touchscreen 1253, an audio circuit 1255, and the like.

The touchscreen 1253 may capture a touch event of a user of the electronic device 120 on or near the touchscreen 1253 (for example, an operation performed by the user on the touchscreen 1253 or near the touchscreen 1253 with any suitable object like a finger or a stylus), and send the captured touch event to another component (for example, the application processor 1201). The operation performed by the user near the touchscreen 1253 may be referred to as a floating touch. Through the floating touch, the user may select, move, or drag a target (for example, an icon) without directly touching the touchscreen 1253. In addition, the touchscreen 1253 may be implemented in a plurality of types such as a resistive type, a capacitive type, an infrared type, and a surface acoustic wave type.

The display (also referred to as a display screen) 1251 is configured to display information entered by the user or information presented to the user. The display may be configured in a form of a liquid crystal display (liquid crystal display, LCD), an organic light-emitting diode (organic light-emitting diode, OLED), or the like. The touchscreen 1253 may cover the display 1251. After detecting a touch event, the touchscreen 1253 transfers the touch event to the application processor 1201 to determine a type of the touch event. Then, the application processor 1201 may provide corresponding visual output on the display 1251 based on the type of the touch event. In FIG. 13, the touchscreen 1253 and the display 1251 are used as two independent components to implement input and output functions of the electronic device 120. However, in some embodiments, the touchscreen 1253 and the display 1251 may be integrated to implement the input and output functions of the electronic device 120. In addition, the touchscreen 1253 and the display 1251 may be disposed on the front side of the electronic device 120 in a full panel form, to implement a bezel-less structure. For example, the display may be configured to display a rendered image of a current frame.

The audio circuit 1255, a speaker 1256, and a microphone 1257 may provide an audio interface between the user and the electronic device 120. The audio circuit 1255 may convert received audio data into an electrical signal, and transmit the electrical signal to the speaker 1256. The speaker 1256 converts the electrical signal into a sound signal for output. In addition, the microphone 1257 converts a collected sound signal into an electrical signal, and the audio circuit 1255 receives the electrical signal and converts the electrical signal into audio data. Then, the audio data is sent to another electronic device through a modem processor and a radio frequency module, or the audio data is output to the memory 1202 for further processing.

Optionally, the electronic device 120 may further include a microcontroller unit (microcontroller unit, MCU) 1206. The MCU 1206 is a coprocessor configured to: obtain and process data from a sensor 1261. A processing capability and power consumption of the MCU 1206 are less than those of the application processor 1201, but the MCU 1206 has an "always-on (always-on)" feature. The MCU 1206 may continuously collect and process sensor data when the application processor 1201 is in a sleep mode, to ensure normal running of the sensor at extremely low power consumption. In an embodiment, the MCU 1206 may be a sensor hub chip. The sensor 1261 may include an optical sensor and a gyroscope sensor. Specifically, the optical sensor may include an ambient light sensor and a proximity sensor. The ambient light sensor may adjust luminance of the display 1251 based on brightness of ambient light. The proximity sensor may power off the display when the electronic device 120 approaches an ear. The gyroscope sensor may be configured to determine a motion posture of the electronic device 120. In some embodiments, an angular velocity of the electronic device 120 around three axes (namely, axes x, y, and z) may be determined by using the gyroscope sensor. Angular velocity information obtained by the gyroscope sensor is converted into a rotation matrix that can describe rotation of an object, and the rotation matrix can be used to align an image. The gyroscope sensor may be further configured to implement image stabilization during photographing. For example, when a shutter is pressed, the gyroscope sensor detects an angle at which the electronic device 120 jitters, calculates, based on the angle, a distance for which a lens module needs to compensate, and enables the lens to offset jitters of the electronic device 120 through reverse motion, to implement image stabilization. The gyroscope sensor may be further used in a navigation scenario and a somatic game scenario. The sensor 1261 may further include other sensors such as an acceleration sensor, a barometer, a hygrometer, a thermometer, and an infrared sensor. Details are not described herein. The MCU 1206 and the sensor 1261 may be integrated into a same chip, or may be separate components connected through a bus.

Optionally, the electronic device 120 may further include an image signal processor (image signal processor, ISP) 1207. The ISP 1207 is coupled to a camera 1271, and is configured to: capture an image, and implement image processing (for example, exposure control, white balance, color calibration, or noise removal) to generate image data. The ISP 1207 may include a processor core that performs necessary software processing or may be implemented by using pure hardware.

Optionally, the electronic device 120 may further include a mobile communication module 1208. The mobile communication module 1208 may provide a solution, applied to the electronic device 120, to wireless communication including 2G/3G/4G/5G or the like. The mobile communication module 1208 may include at least one filter, a switch, a power amplifier, a low noise amplifier (low noise amplifier, LNA), and the like. The mobile communication module 1208 may receive an electromagnetic wave through the antenna, perform processing like filtering or amplification on the received electromagnetic wave, and transmit the electromagnetic wave to the modem processor for demodulation. The mobile communication module 1208 may further amplify a signal modulated by the modem processor, and convert the signal into an electromagnetic wave for radiation through the antenna. In some embodiments, at least a part of functional modules in the mobile communication module 1208 may be disposed in the application processor 1201. In some embodiments, at least a part of functional modules in the mobile communication module 1208 may be disposed in a same component as at least a part of modules in the application processor 1201.

Further, the operating system 1222 installed on the electronic device 120 may be iOS^{®}, Android^{®}, Microsoft^{®}, or another operating system. This is not limited in embodiments of this application.

A person skilled in the art may understand that the electronic device 120 may include fewer or more components than those shown in FIG. 13. The electronic device shown in FIG. 13 includes only components that are more related to the plurality of implementations disclosed in embodiments of this application.

In a possible implementation, the rendering methods in embodiments of this application may be performed by the electronic device 120. For example, when a user plays a mobile game by using the electronic device 120 and tries on clothes by using a virtual fitting room, rendering is performed locally on the electronic device 120 by using the rendering methods provided in embodiments of this application.

All related content of the steps in the foregoing method embodiments may be cited in function descriptions of the corresponding functional modules. Details are not described herein again.

An embodiment of this application further provides a chip, including one or more interface circuits and one or more processors. The one or more processors receive or send data via the one or more interface circuits. When the one or more processors execute computer instructions, steps for implementing the methods in the foregoing embodiments in the foregoing related methods are performed. The interface circuit is a transceiver/transceiver pin 1202.

An embodiment further provides a computer-readable storage medium. The computer-readable storage medium stores computer instructions. When the computer instructions are run on an electronic device, the electronic device is enabled to perform the foregoing related method steps, to implement the methods in the foregoing embodiments.

An embodiment further provides a computer program product. The computer program product includes computer instructions. When the computer instructions are executed by a computer or a processor, the computer is enabled to perform the foregoing related steps, to implement the methods in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the methods in the foregoing method embodiments.

The electronic device, the computer-readable storage medium, the computer program product, or the chip provided in embodiments is configured to perform the corresponding methods provided above. Therefore, for beneficial effect that can be achieved, refer to the beneficial effect of the corresponding methods provided above. Details are not described herein again.

Based on the descriptions of the foregoing implementations, it may be understood by a person skilled in the art that, for ease and brevity of description, division into the foregoing functional modules is merely used as an example for description. During actual application, the foregoing functions may be allocated to different functional modules for implementation based on a requirement, that is, an internal structure of an apparatus is divided into different functional modules, to implement all or a part of the functions described above.

In the several embodiments provided in this application, it should be understood that the disclosed apparatus and method may be implemented in other manners. For example, the described apparatus embodiments are merely examples. For example, division into the modules or units is merely logical function division. During actual implementation, there may be another division manner. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate components may or may not be physically separate, and components displayed as units may be one or more physical units. To be specific, the components may be located in one place, or may be distributed in a plurality of different places. A part or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

Any content in embodiments of this application and any content in a same embodiment may be freely combined. Any combination of the foregoing content shall fall within the scope of this application.

When the integrated unit is implemented in the form of the software functional unit and sold or used as an independent product, the integrated unit may be stored in a readable storage medium. Based on such an understanding, the technical solutions in embodiments of this application essentially, or the part contributing to the conventional technology, or all or a part of the technical solutions may be implemented in a form of a software product. The software product is stored in a storage medium and includes several instructions for instructing a device (which may be a single-chip microcomputer, a chip, or the like) or a processor (processor) to perform all or a part of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Methods or algorithm steps described in combination with the content disclosed in embodiments of this application may be implemented by hardware, or may be implemented by a processor by executing software instructions. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC.

A person skilled in the art should be aware that, in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another place. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely an example but not a limitation. Inspired by this application, a person of ordinary skill in the art may further make many modifications without departing from the purposes of this application and the protection scope of the claims, and all the modifications shall fall within protection of this application.

## Claims

1. A device-cloud collaboration system, wherein the device-cloud collaboration system comprises a server and a terminal device, wherein
the terminal device is configured to send physical simulation data to the server;
the server is configured to: perform physical simulation on a physical simulation object based on the physical simulation data to obtain a first candidate simulation result of a current frame; and send the first candidate simulation result of the current frame to the terminal device; and
the terminal device is further configured to: fuse a second candidate simulation result of the current frame and the first candidate simulation result of the current frame to obtain a target simulation result of the current frame; and render a three-dimensional scene based on the target simulation result of the current frame to obtain a rendered image of the current frame, wherein
the three-dimensional scene comprises the physical simulation object; the first candidate simulation result of the current frame is a simulation result corresponding to a first time point, and the first time point is a predicted time point at which the terminal device receives the first candidate simulation result of the current frame; and the second candidate simulation result of the current frame is a simulation result corresponding to a second time point, and the second time point is a time point at which the terminal device actually receives the first candidate simulation result of the current frame.

2. The system according to claim 1, wherein
the terminal device is further configured to fuse a target simulation result of a rendered frame and the first candidate simulation result of the current frame to obtain a fused result; and
the terminal device is specifically configured to fuse the second candidate simulation result of the current frame and the fused result to obtain the target simulation result of the current frame.

3. The system according to claim 1, wherein the first candidate simulation result of the current frame comprises a first cloth model of the current frame, the second candidate simulation result of the current frame comprises a second cloth model of the current frame, and the target simulation result of the current frame comprises a target cloth model of the current frame;
the server is further configured to: encode the first cloth model of the current frame to obtain an encoded bitstream; and send the encoded bitstream to the terminal device; and
the terminal device is further configured to: decode the encoded bitstream to obtain a reconstruction result of the first cloth model of the current frame; and fuse the second cloth model of the current frame and the reconstruction result of the first cloth model of the current frame to obtain the target cloth model of the current frame.

4. A rendering method applied to a terminal device, wherein the method comprises:
receiving a first candidate simulation result of a current frame;
fusing a second candidate simulation result of the current frame and the first candidate simulation result of the current frame to obtain a target simulation result of the current frame; and
rendering a three-dimensional scene based on the target simulation result of the current frame to obtain a rendered image of the current frame, wherein
the first candidate simulation result of the current frame is a simulation result corresponding to a first time point, and the first time point is a predicted time point at which the terminal device receives the first candidate simulation result of the current frame; and the second candidate simulation result of the current frame is a simulation result corresponding to a second time point, and the second time point is a time point at which the terminal device actually receives the first candidate simulation result of the current frame.

5. The method according to claim 4, wherein the method further comprises:
fusing a target simulation result of a rendered frame and the first candidate simulation result of the current frame to obtain a fused result; and
wherein the fusing the second candidate simulation result of the current frame and the first candidate simulation result of the current frame to obtain the target simulation result of the current frame comprises:
fusing the second candidate simulation result of the current frame and the fused result to obtain the target simulation result of the current frame.

6. The method according to claim 4 or 5, wherein the method further comprises:
sending physical simulation data, wherein the physical simulation data comprises first animation data, the first animation data is used to describe an animation status of a character at a third time point, and the third time point is a time point at which the terminal device sends the first animation data; the first candidate simulation result of the current frame is obtained by performing physical simulation on a physical simulation object based on second animation data, the second animation data is obtained through prediction based on the first animation data, and the second animation data is used to describe an animation status of the character at the first time point; and the three-dimensional scene comprises the physical simulation object and the character, and the character is bound to the physical simulation object.

7. The method according to claim 6, wherein
the first animation data comprises at least one of the following:
an animation sequence identifier of the character;
an animation sequence of the character;
an encoded animation sequence of the character; and
a play position of the animation sequence of the character at the third time point, and a position and an orientation of the character at the third time point.

8. The method according to claim 4 or 5, wherein the method further comprises:
sending physical simulation data, wherein the physical simulation data comprises second animation data, and the second animation data is used to describe an animation status of the character at the first time point; the first candidate simulation result of the current frame is obtained by performing physical simulation on a physical simulation object based on the second animation data; and the three-dimensional scene comprises the physical simulation object and the character, and the character is bound to the physical simulation object.

9. The method according to any one of claims 6 to 8, wherein
the second animation data comprises a play position of the animation sequence of the character at the first time point, and a skeleton status, a position, and an orientation of the character at the first time point.

10. The method according to claim 9, wherein the method further comprises:
fusing a play position of the animation sequence of the character at the second time point and the play position of the animation sequence of the character at the first time point to obtain a target play position of the character; and
rendering the three-dimensional scene based on the target simulation result of the current frame to obtain the rendered image of the current frame comprises:
rendering the three-dimensional scene based on the target simulation result of the current frame and the target play position of the character to obtain the rendered image of the current frame.

11. The method according to claim 10, wherein fusing the play position of the animation sequence of the character at the second time point and the play position of the animation sequence of the character at the first time point to obtain the target play position of the character comprises:
performing weighted calculation on the play position of the animation sequence of the character at the first time point and the play position of the animation sequence of the character at the second time point based on a first weight and a second weight to obtain the target play position of the character.

12. The method according to claim 11, wherein
the first weight corresponds to the play position of the animation sequence of the character at the first time point, and the second weight corresponds to the play position of the animation sequence of the character at the second time point; and
the first weight is inversely proportional to a difference between the first time point and the second time point, and the second weight is directly proportional to the difference between the first time point and the second time point.

13. The method according to any one of claims 5 to 12, wherein fusing the target simulation result of the rendered frame and the first candidate simulation result of the current frame to obtain the fused result comprises:
performing weighted calculation on the target simulation result of the rendered frame and the first candidate simulation result of the current frame based on a third weight and a fourth weight to obtain the fused result.

14. The method according to claim 13, wherein
the third weight corresponds to the target simulation result of the rendered frame, and the fourth weight corresponds to the first candidate simulation result of the current frame;
the third weight is inversely proportional to a difference between a fourth time point and a fifth time point, and the fourth weight is directly proportional to the difference between the fourth time point and the fifth time point; and
the fourth time point is a time point at which the terminal device actually receives a first candidate simulation result of the rendered frame, and the fifth time point is a time point at which the terminal device fuses the second candidate simulation result of the current frame and the first candidate simulation result of the current frame.

15. The method according to any one of claims 5 to 14, wherein fusing the second candidate simulation result of the current frame and the fused result to obtain the target simulation result of the current frame comprises:
performing weighted calculation on the second candidate simulation result of the current frame and the fused result based on a fifth weight and a sixth weight to obtain the target simulation result of the current frame.

16. The method according to claim 15, wherein
the fifth weight corresponds to the second candidate simulation result of the current frame, and the sixth weight corresponds to the fused result;
the fifth weight is directly proportional to a difference between the second time point and a sixth time point, and the sixth weight is inversely proportional to the difference between the second time point and the sixth time point; and
the sixth time point is a time point at which the terminal device sends the physical simulation data, and the first candidate simulation result of the current frame is obtained by performing physical simulation on the physical simulation object based on the physical simulation data.

17. The method according to any one of claims 4 to 16, wherein the first candidate simulation result of the current frame comprises a first cloth model of the current frame, the second candidate simulation result of the current frame comprises a second cloth model of the current frame, and the target simulation result of the current frame comprises a target cloth model of the current frame;
receiving the first candidate simulation result of the current frame comprises:
receiving an encoded bitstream, wherein the encoded bitstream comprises an encoded first cloth model of the current frame;
the method further comprises:
decoding the encoded bitstream to obtain a reconstruction result of the first cloth model of the current frame; and
fusing the second candidate simulation result of the current frame and the first candidate simulation result of the current frame to obtain the target simulation result of the current frame comprises:
fusing the second cloth model of the current frame and the reconstruction result of the first cloth model of the current frame to obtain the target cloth model of the current frame.

18. The method according to any one of claims 6 to 12, wherein
the physical simulation data further comprises switching information, wherein the switching information comprises at least one of the following: an identifier of the physical simulation object, a model of the physical simulation object, or an encoded model of the physical simulation object, wherein the identifier of the physical simulation object indicates the model of the physical simulation object.

19. The method according to any one of claims 4 to 18, wherein the method further comprises:
sending a first timestamp, wherein the first candidate simulation result of the current frame is obtained by performing physical simulation on the physical simulation object based on the physical simulation data after verification on the first timestamp succeeds.

20. The method according to any one of claims 4 to 19, wherein the method further comprises:
receiving a second timestamp; and
when verification on the second timestamp succeeds, performing the step of fusing the second candidate simulation result of the current frame and the first candidate simulation result of the current frame to obtain the target simulation result of the current frame.

21. The method according to any one of claims 4 to 20, wherein the first candidate simulation result of the current frame comprises at least one of the following: a position and an orientation of a rigid body, or a cloth model.

22. A physical simulation method applied to a server, wherein the method comprises:
receiving physical simulation data;
performing physical simulation on a physical simulation object based on the physical simulation data to obtain a first candidate simulation result of a current frame;
encoding the first candidate simulation result of the current frame to obtain an encoded bitstream; and
sending the encoded bitstream.

23. The method according to claim 20, wherein the first candidate simulation result of the current frame comprises a first cloth model of the current frame.

24. A device-cloud collaboration system, wherein the device-cloud collaboration system comprises a server and a terminal device, wherein
the terminal device is configured to send first animation data to the server, wherein the first animation data is used to describe an animation status of the character at a first time point, and the first time point is a time point at which the terminal device sends the first animation data to the server;
the server is configured to: predict second animation data based on the first animation data, wherein the second animation data is used to describe an animation status of the character at a second time point, and the second time point is a predicted time point at which the terminal device receives the second animation data; and send the second animation data to the terminal device; and
the terminal device is configured to: fuse a play position of an animation sequence of the character at the second time point and a play position of the animation sequence of the character at a third time point to obtain a target play position of the character; and render a three-dimensional scene based on the target play position of the character to obtain a rendered image, wherein the three-dimensional scene comprises the character, and the third time point is a time point at which the terminal device actually receives the second animation data.

25. A rendering method applied to a terminal device, wherein the method comprises:
sending first animation data, wherein the first animation data is used to describe an animation status of the character at a first time point, and the first time point is a time point at which the terminal device sends the first animation data to a server;
receiving second animation data, wherein the second animation data is used to describe an animation status of the character at a second time point, and the second time point is a predicted time point at which the terminal device receives the second animation data;
fusing a play position of an animation sequence of the character at the second time point and a play position of the animation sequence of the character at a third time point to obtain a target play position of the character, wherein the third time point is a time point at which the terminal device actually receives the second animation data; and
rendering a three-dimensional scene based on the target play position of the character to obtain a rendered image, wherein the three-dimensional scene comprises the character.

26. The method according to claim 25, wherein fusing the play position of the animation sequence of the character at the second time point and the play position of the animation sequence of the character at the third time point to obtain the target play position of the character comprises:
performing weighted calculation on the play position of the animation sequence of the character at the second time point and the play position of the animation sequence of the character at the third time point based on a first weight and a second weight to obtain the target play position of the character.

27. The method according to claim 26, wherein
the first weight corresponds to the play position of the animation sequence of the character at the second time point, and the second weight corresponds to the play position of the animation sequence of the character at the third time point; and
the first weight is inversely proportional to a difference between the second time point and the third time point, and the second weight is directly proportional to the difference between the second time point and the third time point.

28. The method according to any one of claims 25 to 27, wherein
the first animation data comprises at least one of the following:
an animation sequence identifier of the character;
the animation sequence of the character;
an encoded animation sequence of the character; and
a play position of the animation sequence of the character at the first time point, and a position and an orientation of the character at the first time point.

29. The method according to any one of claims 25 to 28, wherein
the second animation data comprises the play position of the animation sequence of the character at the second time point, and a skeleton status, a position, and an orientation of the character at the second time point.

30. A terminal device, comprising:
a memory and a processor, wherein the memory is coupled to the processor; and
the memory stores program instructions, and when the program instructions are executed by the processor, the terminal device is enabled to perform the method according to any one of claims 4 to 21.

31. A server, comprising:
a memory and a processor, wherein the memory is coupled to the processor; and
the memory stores program instructions, and when the program instructions are executed by the processor, the server is enabled to perform the method according to either claim 22 or 23.

32. A terminal device, comprising:
a memory and a processor, wherein the memory is coupled to the processor; and
the memory stores program instructions, and when the program instructions are executed by the processor, the terminal device is enabled to perform the method according to any one of claims 25 to 29.

33. A computer-readable storage medium, wherein the computer-readable storage medium stores a computer program, and when the computer program is run on a computer or a processor, the computer or the processor is enabled to perform the method according to any one of claims 4 to 23, or the computer or the processor is enabled to perform the method according to any one of claims 25 to 29.

34. A computer program product, wherein the computer program product comprises computer instructions, and when the computer instructions are executed by a computer or a processor, a step of the method according to any one of claims 4 to 23 is performed, or a step of the method according to any one of claims 25 to 29 is performed.
